# EUROPEAN PATENT APPLICATION

(11) **EP 4 411 433 A1**
(43) Date of publication of application: **07.08.2024**
(21) Application number: 24154681.1
(22) Date of filing: 30.01.2024
(51) Int. Cl.: G02B 3/14, G02B 27/01, G02F 1/29, G02B 3/00

(54) **GRADIENT-INDEX LIQUID CRYSTAL LENS HAVING CURVED SURFACE SHAPE**

(30) Priority: 03.02.2023 US 202363483176 P; 17.11.2023 US 202318512560
(71) Applicant: Meta Platforms Technologies, LLC, Menlo Park, CA 94025 (US)
(72) Inventor: Jamali, Afsoon, Menlo Park (US); Sharma, Robin, Menlo Park (US); Jang, Changwon, Menlo Park (US); Reznikov, Dmytro Y, Menlo Park (US)
(74) Representative: Murgitroyd & Company

(57) **Abstract**

A display device may include a display screen having a plurality of light emitting elements and a lens system that receives light emitted from the display screen. The lens system may include a lens having a liquid crystal module, an incident side surface on a first side of the liquid crystal module, and an exit side surface on a second side of the liquid crystal module, wherein at least one of the incident side surface and the exit side surface comprises a curved surface. Various other devices, systems, and methods are also disclosed.

## Description

### TECHNICAL FIELD

The present disclosure relates generally to gradient-index liquid crystal lenses and finds particular utility in providing a gradient-index liquid crystal lens having a curved surface shape.

### BACKGROUND

Artificial reality devices, such as virtual reality headsets, can be used to simulate and/or reproduce a variety of virtual and remote environments. For example, stereoscopic images can be displayed on an electronic display inside a headset to simulate the illusion of depth, and head tracking sensors can be used to estimate what portion of the virtual environment is being viewed by the user. However, because existing headsets are often unable to correctly render or otherwise compensate for vergence and accommodation conflicts, such simulation can cause visual fatigue and discomfort for users. Augmented reality and mixed reality headsets may display a virtual image overlapping with real-world images. To create a comfortable viewing experience, virtual images generated by such headsets are typically displayed at distances suitable for eye accommodations of real-world images in real time during the viewing process.

Vergence-accommodation conflict is a common problem in artificial reality systems, including virtual, augmented, and mixed reality systems. "Accommodation" is a process of adjusting the focal length of an eye lens. During accommodation, the optics of an eye are adjusted to keep an object in focus on the retina as its distance from the eye varies. "Vergence" is the simultaneous movement or rotation of both eyes in opposite directions to obtain or maintain binocular vision and is connected to accommodation of the eye. Under normal conditions, when human eyes look at a new object at a distance different from an object they had been looking at, the eyes automatically change focus (by changing their shape) to provide accommodation at the new distance or vergence distance of the new object.

### SUMMARY

According to a first aspect, there is provided a lens system comprising: a lens comprising: a liquid crystal module; an incident side surface on a first side of the liquid crystal module; and an exit side surface on a second side of the liquid crystal module, wherein at least one of the incident side surface and the exit side surface comprises a curved surface.

Both the incident side surface and the exit side surface may comprise a curved surface.

A radius of curvature of the incident side surface may be approximately the same as a radius of curvature of the exit side surface.

The liquid crystal module may comprise: a driving electrode array; a common electrode; and a lens liquid crystal layer disposed between the driving electrode array and the common electrode.

The liquid crystal module may extend along a curved path.

The lens may be a first lens. The lens system may further comprise a second lens overlapping the first lens.

The second lens may comprise a curved surface facing the incident side surface or exit side surface of the first lens.

The curved surface of the second lens may have a radius of curvature that is approximately the same as a radius of curvature of the facing incident side surface or exit side surface of the first lens.

The second lens may comprise a pancake lens.

The lens system may further comprise a reflective polarizer positioned between the second lens and the first lens.

The lens may comprise a plurality of Fresnel reset sections concentrically arranged between a center and an outer periphery of the lens.

The incident side surface may comprise a convex surface and the exit side surface may comprise a concave surface.

The concave exit side surface may be laminated onto a convex surface of an abutting optical element.

According to a second aspect, there is provided a display device comprising: a display screen having a plurality of light emitting elements; and a lens system that receives light emitted from the display screen, the lens system comprising the lens system of the first aspect.

The lens system may comprise a second lens as discussed herein. The second lens may be disposed between the display screen and the first lens.

The incident side surface may comprise a convex surface facing the display screen.

According to a third aspect, there is provided a method comprising: providing a lens comprising: a liquid crystal module; an incident side surface on a first side of the liquid crystal module; and an exit side surface on a second side of the liquid crystal module, wherein at least one of the incident side surface and the exit side surface comprises a curved surface; and positioning another curved surface of an optical element adjacent the at least one curved surface of the lens.

The optical element may comprise a second lens.

The method may further comprise positioning a display screen such that light emitted from the display screen passes through the optical element to the lens.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1A illustrates a relationship between vergence and accommodation in the real world.
FIG. 1B illustrates a conflict between vergence and accommodation in a three-dimensional (3D) display screen.
FIG. 2A is a perspective view of an example head-mounted display.
FIG. 2B is a cross-sectional view of a front rigid body of the head-mounted display shown in FIG. 2A.
FIG. 3 is a diagram illustrating light refracted through an example gradient-index liquid crystal (GRIN LC) lens.
FIG. 4 is a cross-sectional diagram illustrating the structure of an example GRIN LC lens.
FIG. 5 is a plot illustrating a curve of optical path difference versus voltage utilized to obtain a desired liquid phase profile.
FIG. 6A illustrates an example GRIN LC lens.
FIG. 6B illustrates an example GRIN LC lens having two Fresnel reset regions.
FIG. 7A is a plot showing an ideal parabolic phase profile for an example GRIN LC lens.
FIG. 7B is a plot showing a 2-dimensional (2D) phase map for an example GRIN LC lens having five Fresnel resets.
FIG. 8 illustrates an example GRIN LC lens including five Fresnel reset sections for producing five Fresnel resets as shown in FIG. 7B.
FIG. 9A is a plot showing an ideal parabolic phase profile for an example large-diameter GRIN LC lens.
FIG. 9B is a plot showing a 2D phase map for an example large-diameter GRIN LC lens having 28 Fresnel resets.
FIG. 10A illustrates an example GRIN LC system that includes an electrode array and a plurality of bus lines.
FIG. 10B shows a close-up view of a portion of the GRIN LC system illustrated in FIG. 10A.
FIG. 11A illustrates a system that includes light passing through a flat GRIN LC lens.
FIG. 11B illustrates illustrates a system that includes light passing through a curved GRIN LC lens.
FIG. 12A illustrates a lens system that includes a GRIN LC lens module.
FIG. 12B shows a close-up view of a portion of the GRIN LC lens module illustrated in FIG. 12A.
FIG. 13 illustrates a display system that includes a display screen and a pancake lens that are optically aligned with a curved GRIN LC module.
FIG. 14 illustrates diffraction efficiency of light versus steering angle for a GRIN LC lens module.
FIG. 15A illustrates diffraction efficiency versus pixel spacing for various GRIN LC lenses.
FIG. 15B illustrates diffraction efficiency versus diffraction angle for various GRIN LC lenses.
FIG. 16 illustrates optical power swing versus lens radius for various GRIN LC lens thicknesses.
FIG. 17A illustrates thickness versus radius for a one cell GRIN LC lens.
FIG. 17B illustrates thickness versus radius for a two cell GRIN LC lens.
FIG. 18A illustrates minimum Fresnel zone width versus radius for a one cell GRIN LC lens.
FIG. 18B illustrates minimum Fresnel zone width versus radius for a two cell GRIN LC lens.
FIG. 19 is a flow diagram of an exemplary method for manufacturing a GRIN LC lens system.
FIG. 20 is an illustration of an exemplary varifocal system that may be used in connection with embodiments of this disclosure.
FIG. 21 is an illustration of exemplary augmented-reality glasses that may be used in connection with embodiments of this disclosure.
FIG. 22 is an illustration of an exemplary virtual-reality headset that may be used in connection with embodiments of this disclosure.

Throughout the drawings, identical reference characters and descriptions indicate similar, but not necessarily identical, elements. While the examples described herein are susceptible to various modifications and alternative forms, specific examples have been shown by way of example in the drawings and will be described in detail herein. However, the examples described herein are not intended to be limited to the particular forms disclosed. Rather, the present disclosure covers all modifications, equivalents, and alternatives falling within the scope of the appended claims.

### DETAILED DESCRIPTION

In accordance with various examples, disclosed display devices may include gradient-index liquid crystal (GRIN LC) lenses that utilize variations in liquid crystal alignment to refract light in a manner similar to conventional lenses. A GRIN LC lens, as disclosed herein, may include an electrode array that provides variations in voltages applied to a liquid crystal layer of the lens, with the variations producing a voltage gradient(s) proceeding from a center of the lens outward. Voltages applied to the liquid crystal layer may be selectively changed so as to generate different lens powers corresponding to active display conditions and/or user eye orientation. Accordingly, GRIN LC lenses, as disclosed herein, may address the vergence-accommodation conflict by compelling a user's eyes to focus at a focal distance coinciding with a vergence location of a virtual object displayed by the display device. Moreover, since the lens diopter is not determined solely by a surface shape of the GRIN LC lens, the thickness of the disclosed GRIN LC lenses may be significantly reduced in comparison to conventional lenses.

GRIN LC lenses having large diameters may be desirable in various devices to provide a sufficient aperture. However, as the lens diameter increases, the necessary lens thickness and required voltage drop may also increase. Additionally, the required reset time may be excessively long in such larger diameter lenses. In order to produce such larger diameter lenses, Fresnel resets may be included in the lens structure. The Fresnel resets may allow for thinner GRIN LC lenses that have sufficiently fast response times. However, transition regions between Fresnel reset sections may diffract and scatter light in undesired directions, causing unpleasant image artifacts and/or distortions. While dark masking layers may be used to block scattered light at the transition regions, such masking layers may be visible to viewers so as to interfere with their viewing experience.

In accordance with examples disclosed herein, a lens system may include a GRIN LC lens having one or more curved surfaces. In some examples, the GRIN LC lens element may include a curved incident side surface and a curved exit side surface. The curved incident side surface may, for example, be convex in shape with a radius of curvature selected to reduce incident angles of light received from a display screen. Reducing incident light angles may help reduce perceptible light diffraction and scattering. For example, the curved surface(s) may prevent light that is diffracted and/or scattered at Fresnel reset regions of a GRIN LC lens from reaching an eye-box of a head-mounted display device. Additionally, the curved surface(s) of the GRIN LC lens may have little or substantially no effect on the lens focal distance. In various examples, optical elements may be shaped to conform to one or more curved surfaces of the GRIN LC lenses. Such optical elements may be placed abutting a GRIN LC, and in some examples, may be laminated onto at least one curved surface of the GRIN LC.

GRIN LC lenses with curved surfaces, as disclosed herein, may obviate the need to use a dark masking layer or other image noise blocking layer, to block undesirable light scattering. Thus, optical characteristics of GRIN LC lenses having Fresnel resets may be improved, resulting in reduced light scattering and increased clarity in comparison to other lenses. Thus, visible lines, such as those evident on a dark masking layer, may not be present in the disclosed lens systems. Accordingly, the lens systems described herein may have minimal space requirements while providing high quality display characteristics, making them suitable for use in a variety of display systems, including various head-mounted display systems.

Features from any of the examples described herein may be used in combination with one another in accordance with the general principles described herein. These and other examples, features, and advantages will be more fully understood upon reading the following detailed description in conjunction with the accompanying drawings and claims.

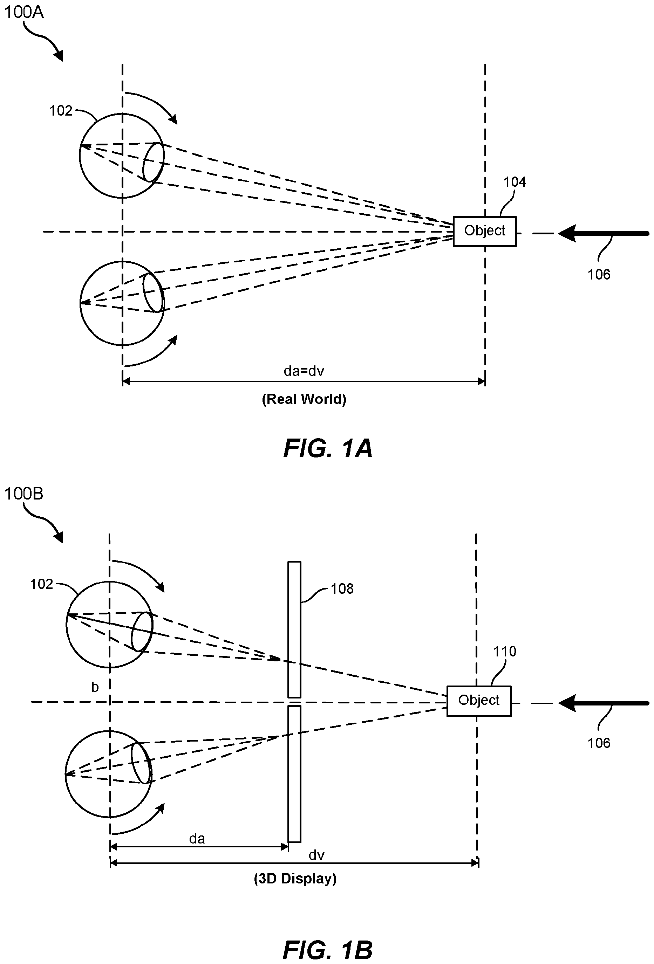

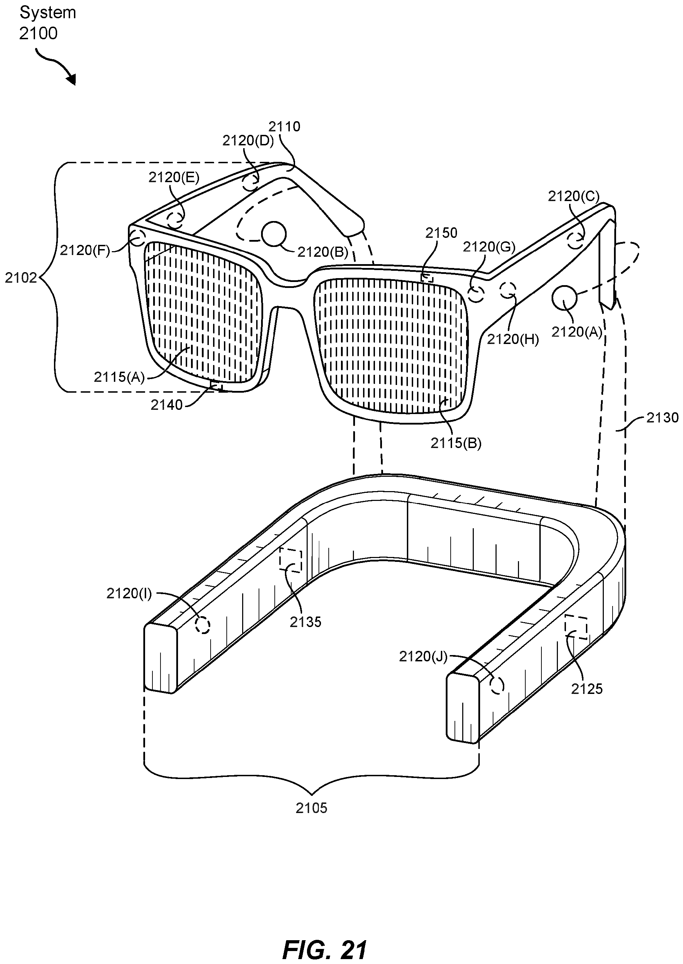

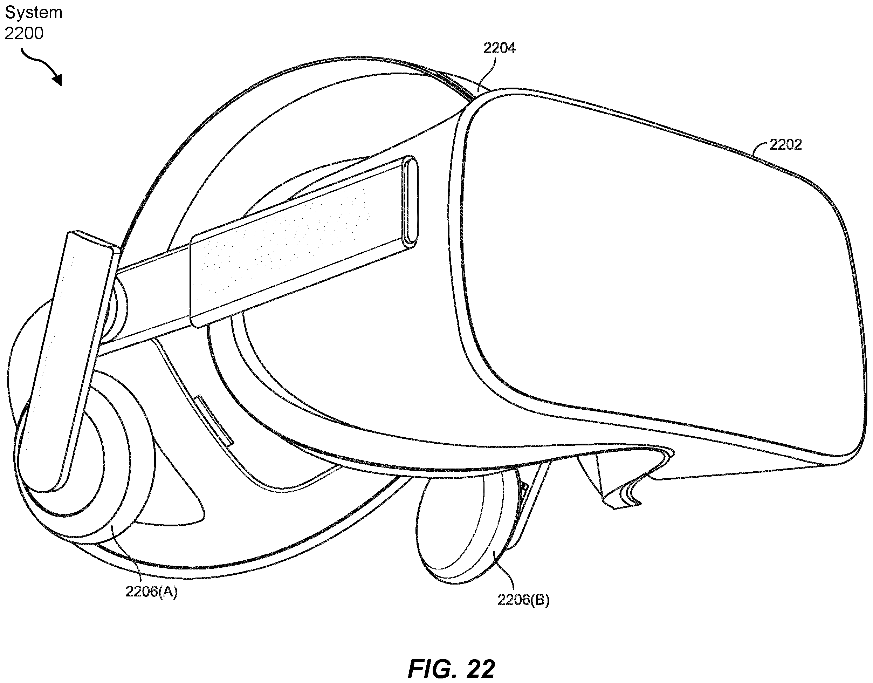

The following will provide, with reference to FIGS. 1-22, a detailed description of GRIN LC lenses and systems. The discussion associated with FIGS. 1-20 relates to the architecture, operation, and manufacturing of various example GRIN LC lenses and systems. The discussion associated with FIGS. 21 and 22 relates to exemplary virtual reality and augmented reality devices that may include GRIN LC lenses as disclosed herein.

FIG. 1A shows a diagram 100A illustrating an example of how the human eye experiences vergence and accommodation in the real world. As shown in FIG. 1A, a user is looking at a real object 104 such that the user's eyes 102 are verged on real object 104 and gaze lines from the user's eyes 102 intersect at real object 104. As real object 104 is moved closer to the user's eyes 102 (as indicated by arrow 106), each eye 102 rotates inward (i.e., convergence) to stay verged on real object 104. As real object 104 gets closer, the user's eyes 102 accommodate for the closer distance by changing their shape to reduce the power or focal length. The distance at which the eyes 102 must be focused to create a sharp retinal image is the accommodation distance. Thus, under normal conditions in the real world, the vergence distance (dv) is equal to the accommodation distance (da).

FIG. 1B shows a diagram 100B illustrating an example conflict between vergence and accommodation that can occur with conventional three-dimensional displays. As shown in FIG. 1B, a user is looking at a virtual object 110 displayed on an electronic screen(s) 108. The user's eyes 102 are verged on virtual object 110 (gaze lines from the user's eyes 102 are shown intersecting at virtual object 110). However, virtual object 110 is located at a greater distance from the user's eyes 102 than electronic screen(s) 108. Subsequently, as virtual object 110 is rendered on the electronic screen(s) 108 to appear closer to the user, each eye 102 may rotate inward to stay verged on virtual object 110, but the power or focal length of each eye 102 may not change accordingly. Rather, the focal length of each eye 102 may remain the same as the focal lengths of electronic screen(s) 108. Hence, the user's eyes may not accommodate in the manner illustrated and described in conjunction with FIG. 1A.

As such, instead of changing power or focal length to accommodate for the further vergence distance dv associated with virtual object 110, each eye 102 maintains accommodation at a closer accommodation distance da associated with electronic screen(s) 108. Thus, the vergence distance dv may not be equal to the accommodation distance da for the human eye for objects displayed on 2-dimensional electronic screens. This discrepancy between vergence distance dv and accommodation distance da is commonly referred to as "vergence-accommodation conflict." A user experiencing only vergence or accommodation, but not both simultaneously, with respect to a virtual object may undesirably experience eye fatigue and discomfort during use.

"Optical series," as used herein, may refer to relative positioning of a plurality of optical elements such that light, for each optical element of the plurality of optical elements, is transmitted by that optical element before being transmitted by another optical element of the plurality of optical elements. For examples described herein, optical elements may be aligned in various arrangements without regard to a specific ordering within an optical series. For example, optical element A placed before optical element B, or optical element B placed before optical element A, may both be in optical series with each other. An optical series may represent a combination of optical elements having individual optical properties that are compounded with each other when placed in series.

As used herein, a material or element that is "transparent" or "optically transparent" may, for a given thickness, have a transmissivity within the visible light spectrum of at least approximately 70%, e.g., approximately 70, 80, 90, 95, 97, 98, 99, or 99.5%, including ranges between any of the foregoing values, and less than approximately 10% bulk haze, e.g., approximately 0.5, 1, 2, 4, 6, or 8% bulk haze, including ranges between any of the foregoing values. In accordance with some examples, a "fully transparent" material or element may have (a) a transmissivity (i.e., optical transmittance) within the visible light spectrum of at least approximately 90%, e.g., approximately 90, 95, 97, 98, 99, or 99.5%, including ranges between any of the foregoing values, (b) less than approximately 5% bulk haze, e.g., approximately 0.1, 0.25, 0.5, 1, 2, or 4% bulk haze, including ranges between any of the foregoing values, (c) less than approximately 30% reflectivity, e.g., approximately 1, 2, 5, 10, 15, 20, or 25% reflectivity, including ranges between any of the foregoing values, and (d) at least 70% optical clarity, e.g., approximately 70, 80, 90, 95, 97, 98, 99, or 99.5% optical clarity, including ranges between any of the foregoing values. Transparent and fully transparent materials will typically exhibit very low optical absorption and minimal optical scattering. In some examples, "transparency" may refer to internal transparency, i.e., exclusive of Fresnel reflections.

As used herein, the terms "haze" and "clarity" may refer to an optical phenomenon associated with the transmission of light through a material, and may be attributed, for example, to the refraction of light within the material, e.g., due to secondary phases or porosity and/or the reflection of light from one or more surfaces of the material. As will be appreciated by those skilled in the art, haze may be associated with an amount of light that is subject to wide angle scattering (i.e., at an angle greater than 2.5° from normal) and a corresponding loss of transmissive contrast, whereas clarity may relate to an amount of light that is subject to narrow angle scattering (i.e., at an angle less than 2.5° from normal) and an attendant loss of optical sharpness or "see through quality."

A material or element that is "reflective" or "optically reflective" may, for example, have a transmissivity within the visible light spectrum of less than approximately 2%, e.g., less than 2, 1, 0.5, 0.2, or 0.1%, including ranges between any of the foregoing values.

As used herein, the term "approximately" in reference to a particular numeric value or range of values may, in certain examples, mean and include the stated value as well as all values within 10% of the stated value. Thus, by way of example, reference to the numeric value "50" as "approximately 50" may, in certain examples, include values equal to 50±5, i.e., values within the range 45 to 55.

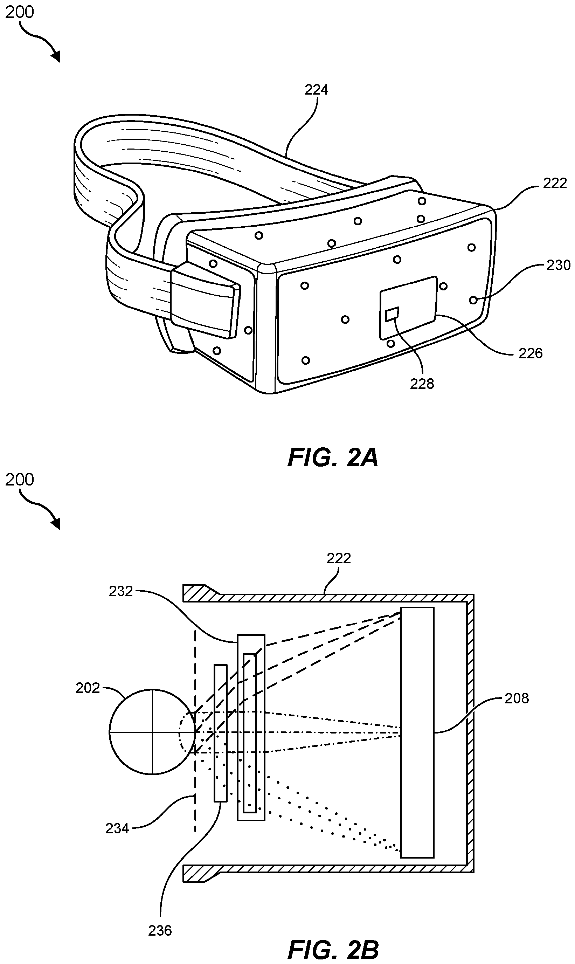

FIG. 2A shows an example head-mounted display (HMD) 200 in accordance with some examples. As shown in FIG. 2A, the HMD 200 may include a front rigid body 222 and a band 224. The front rigid body 222 may include one or more electronic display elements of an electronic display, an inertial measurement unit (IMU) 226, one or more position sensors 228, and locators 230. In the example shown in FIG. 2A, position sensors 228 may be located within IMU 226, and neither IMU 226 nor position sensors 228 may be visible to a user on the device exterior. HMD 200 may, for example, function as a virtual reality device, an augmented reality device, and/or a mixed reality device. In some examples, when HMD 200 acts as an augmented or mixed reality device, portions of HMD 200 and its internal components may be at least partially transparent.

FIG. 2B is a cross-sectional view of the example of HMD 200 shown in FIG. 2A. As shown in FIG. 2B, front rigid body 222 may include an electronic display 208, a varifocal block 232, and, in some examples, an eye-tracking system 236. Electronic display 208 may display images (i.e., virtual scenes) to a user wearing HMD 200. In some examples, electronic display 208 may include a stack of one or more waveguide displays including, but not limited to, a stacked waveguide display.

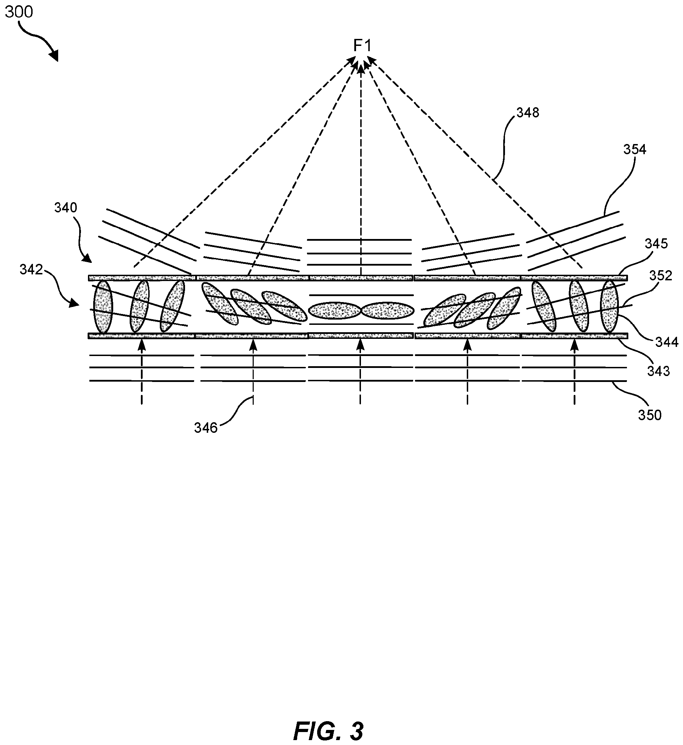

Varifocal block 232 may include one or more varifocal structures in optical series. A varifocal structure is an optical device that is configured to dynamically adjust its focus in accordance with instructions from a varifocal system. In some examples, varifocal block 232 may include a GRIN LC lens as disclosed herein (see, e.g., FIGS. 3-12). Electronic display 208 and varifocal block 232 together provide image light to an exit pupil 234. Eye-tracking system 236 may include, e.g., one or more sources that illuminate one or both eyes of the user and one or more cameras that capture images of one or both eyes of the user. Eye-tracking system 236 may detect a location of an object in the virtual scene at which the user's eye 202 is currently looking. Exit pupil 234 may be the location of front rigid body 222 where a user's eye 202 is positioned. For purposes of illustration, FIG. 2B shows a cross section of front rigid body 222 associated with a single eye 202, but another portion of varifocal block 232 or another varifocal block, which is separated from varifocal block 232, may provide altered image light to another eye of the user.

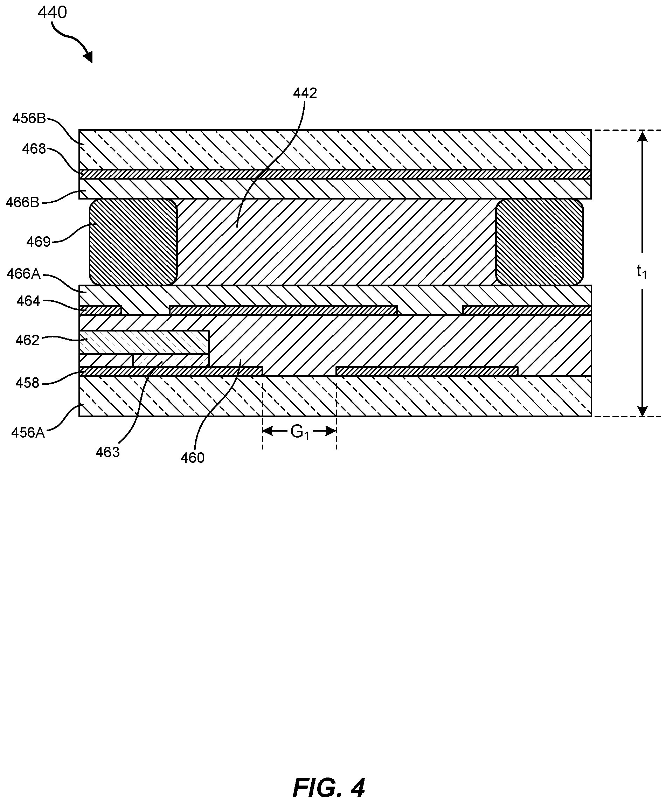

FIG. 3 shows a diagram 300 of light refracted through an example GRIN LC lens 340 according to some examples. Liquid crystal orientations may be varied as desired between liquid crystal molecules located at central and peripheral positions within GRIN LC lens 340. For example, liquid crystal molecules may be selectively oriented so as to redirect incident light to provide a desired degree of optical power. GRIN LC lens 340 in FIG. 3 includes a liquid crystal layer 342 that includes a solution of liquid crystal molecules 344. As shown, liquid crystal molecules 344 may be selectively varied in orientation proceeding from a central region to a laterally peripheral region of liquid crystal layer 342. For example, liquid crystal molecules 344 at a central region of liquid crystal layer 342 may be oriented substantially horizontal to surfaces abutting liquid crystal layer 342 (see, e.g., alignment layers 466A and 466B shown in FIG. 4). Proceeding peripherally outward from the center, liquid crystal molecules 344 may progressively change in pitch, with liquid crystal molecules 344 assuming an increasingly angular slope.

The orientations of liquid crystal molecules 344 in each region of liquid crystal layer 342 may be oriented by, for example, progressively changing a voltage applied to liquid crystal layer 342 at the respective regions. For example, a voltage applied to the peripheral region of liquid crystal layer 342 may be higher or lower than a voltage applied to the central region of liquid crystal layer 342, with voltages between the central and peripheral regions progressively increasing or decreasing proceeding from the central region to the peripheral region. While rod-shaped liquid crystal molecules are illustrated in the example shown in FIG. 3, any suitable liquid crystal molecules having any suitable shape may be included in liquid crystal layer 342. For example, liquid crystal layer 342 may additionally or alternatively include disc-like (i.e., discotic), bowlic (i.e., conic), bent-core, and/or any other suitable type of liquid crystal molecules.

FIG. 3 illustrates the manner in which variations in liquid crystal orientation may alter paths of light beams passing through liquid crystal layer 342. In the example shown, incident light beams may be refracted through various regions of liquid crystal layer 342 so that they are focused at a common focal point F1. In some examples, liquid crystal molecules 344 in liquid crystal layer 342 may be oriented to instead refract light outward to provide divergent lensing. In the example illustrated in FIG. 3, incident light 346 may approach an incident side surface 343 of GRIN LC lens 340 along an incident wavefront 350 such that incident light 346 enters GRIN LC lens 340 at an angle that is approximately normal to incident side surface 343. As described in greater detail below with reference to FIG. 4, external side surfaces of liquid crystal layer 342 may include transparent surfaces, such as surfaces formed of glass, polymer, sapphire, silicon-based materials, etc., which may be uncoated or coated (e.g., with an antireflective film).

Incident light 346 may pass through liquid crystal layer 342, where the light is refracted by liquid crystal molecules 344. Liquid crystal molecules 344 in different regions of liquid crystal layer 342 may be oriented at varied angles so as to refract light at correspondingly different angles within each region. For example, as shown in FIG. 3, liquid crystal molecules 344 may vary in degree of inclination with respect to abutting surfaces (e.g., alignment surfaces as shown in FIG. 4) along a gradient proceeding from the central region towards the outer periphery of liquid crystal layer 342. Liquid crystal molecules 344 having higher degrees of inclination may refract incoming light to a greater extent than those with lower degrees of inclination, as represented by liquid crystal wavefronts 352, which have different orientations corresponding to different inclinations of liquid crystal molecules 344 at various locations. The liquid crystal molecules 344 may thus be oriented at pitches that direct light in different regions towards a common focal point. Beams of exiting light 348 emitted from an exit side surface 345 of GRIN LC lens 340 are shown in FIG. 3. The exiting light 348 at different regions may be directed along corresponding exiting wavefronts 354 such that beams of exiting light 348 converge at an exemplary focal point F1.

In some examples, different voltage profiles may be applied to liquid crystal layer 342 to change optical characteristics of GRIN LC lens 340 as needed. For example, voltages may be selectively applied by an electrode array of GRIN LC lens 340 to reorient liquid crystal molecules 344 so as to change the location of focal point F1 and an optical power of GRIN LC lens 340. In at least one example, liquid crystal molecules 344 may also be selectively oriented to produce a negative diopter in GRIN LC lens 340 so as to spread incoming light outward in a manner similar to a concave lens. In this example, the negative power may be accomplished by orienting liquid crystal molecules 344 within various regions of liquid crystal layer 342 to refract light outward to an increasingly greater extent proceeding from a central region outward toward the periphery.

FIG. 4 is a cross-sectional diagram illustrating the structure of an example GRIN LC lens 440 according to some examples. Dimensions of GRIN LC lens 440 and/or parts thereof illustrated in this figure are not necessarily to scale. As shown, GRIN LC lens 440 may include a pair of lens substrates 456A and 456B defining opposing outer surfaces of GRIN LC lens 440. Lens substrates 456A and/or 456B may be formed of one or more rigid, transparent materials, such as glass, sapphire, polymer, and/or silicon-based (e.g., SiO2) materials. Lens substrates 456A and 456B may be substantially transparent in the visible wavelength band (i.e., approximately 380 nm to approximately 750 nm). In certain examples, the lens substrate 456A and/or 456B may also be transparent in some or all of the infrared (IR) band (i.e., approximately 750 nm to approximately 1 mm). Surfaces of lens substrates 456A and 456B may be uncoated or coated (e.g., with an antireflective film, polarization film, etc.). GRIN LC lens 440 may have a lens thickness t1 measured from lens substrate 456A to lens substrate 456B.

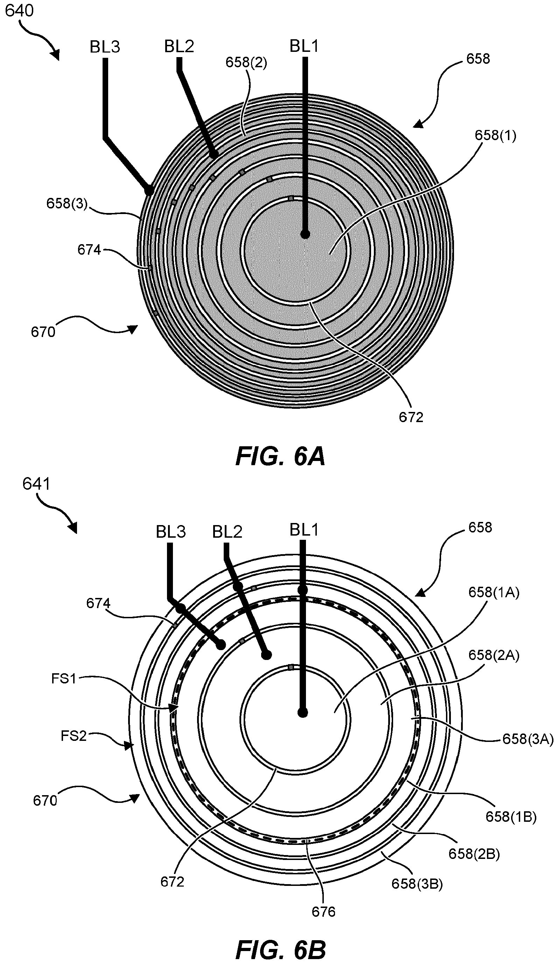

As shown in FIG. 4, and array of driving electrodes 458 may be disposed on a first lens substrate 456A. Adjacent driving electrodes 458 may be separated from each other by intervening gaps G1, as illustrated. Gaps G1 may each have any Isuitable width between driving electrodes 458, such as a width of from approximately 0.5 µm to approximately 4 µm (e.g., approximately 0.5, 1.0, 1.5, 2.0, 2.5, 3.0, 3.5, or 4.0 µm). As described in additional detail below, adjacent driving electrodes 458 may be electrically coupled to each other by a linking resistor within a shared driving zone (see, e.g., FIGS. 6A and 6B). Driving electrodes 458 may be arranged in a driving electrode array that overlaps a liquid crystal layer 442 of GRIN LC lens 440.

A bus line 462 may be electrically coupled to at least one of driving electrodes 458 to provide selected voltages to driving electrodes 458. For example, bus line 462 may be electrically coupled to the illustrated driving electrode 458 by a via interconnect 463 extending directly between bus line 462 and the driving electrode 458. Voltages at other driving electrodes 458 may be different than the voltage applied by bus line 462 due to, for example, reductions in voltages across the inter-electrode resistors connecting other driving electrodes to the driving electrode 458 coupled to the bus line 462. Voltages applied to each of driving electrodes 458 may be controllably varied to produce desired lensing of light passing through liquid crystal layer 442. In various examples, GRIN LC lens 440 may include multiple bus lines that are each electrically coupled to different electrodes to provide separate driving zones and/or Fresnel reset regions, as discussed in more detail below. Additionally, multiple bus lines within a particular driving zone and/or Fresnel reset may be used to apply different voltages to separate driving electrodes 458 so as to provide a voltage gradient(s) between the driving electrodes 458.

According to at least one example, an insulating layer 460 may be disposed over driving electrodes 458 and bus line 462. Insulating layer 460 may also surround portions of bus line 462 not directly coupled to a driving electrode 458 such that portions of insulating layer 460 are disposed between bus line 462 and other driving electrodes 458. In some examples, portions of insulating layer 460 may also be disposed in gaps G1 defined between adjacent driving electrodes 458. Insulating layer 460 may include one or more dielectric layers, which may include a stoichiometric or non-stoichiometric oxide, fluoride, oxyfluoride, nitride, oxynitride, sulfide, SiO2, TiO2, Al2O3, Y2O3, HfO2, ZrO2, Ta2O5, Cr2O3, AIF3, MgFS2, NdF3, LaF3, YF3, CeF3, YbF3, Si3N4, ZnS, and/or ZnSe.

A floating electrode array including a plurality of floating electrodes 464 may be disposed on insulating layer 460 so that insulating layer 460 is disposed between driving electrodes 458/bus line 462 and floating electrodes 464. As shown in FIG. 4, floating electrodes 464 may be arrayed so as to overlap gaps G1 between driving electrodes 458. Floating electrodes 464 may be capacitively coupled to driving electrodes 458 rather than directly driven by ohmic connection to driving electrodes 458. In some examples, floating electrodes 464 may be configured to cover a portion of the area of each of neighboring driving electrode 458 (e.g., up to approximately half of each neighboring driving electrode 458). In some examples floating electrodes 464 may be configured to overlap a substantial portion (e.g., approximately half or less) of the area of each neighboring driving electrode 458. Floating electrodes 464 may address image degradation in GRIN LC lens 440 by reducing light scattering due to gaps G1 defined between adjacent driving electrodes 458.

A first alignment layer 466A may be formed over floating electrodes 464 and portions of insulating layer 460 exposed in gap regions between adjacent floating electrodes 464. First alignment layer 466A may contact liquid crystal layer 442 and may enable proper orientation of liquid crystal molecules within liquid crystal layer 442. First alignment layer 466A may include any material and surface texture suitable for aligning liquid crystal molecules in a desired manner. For example, first alignment layer 466A may be formed of a polyimide (PI) material that is rubbed on the surface facing liquid crystal layer 442. In at least one example, first alignment layer 466A may be formed of a PI layer having a surface that is modified by irradiation with ultraviolet (UV) light to promote curing or partial curing of the PI material. Following UV irradiation, the surface of first alignment layer 466A may be mechanically rubbed in selected directions (e.g., horizontally, circularly, etc.) to provide a substantially consistent surface structure producing predictable surface alignment of liquid crystal molecules in liquid crystal layer 442. Any other suitable material or combination of materials may be included in first alignment layer 466A, including, for example, polymers (e.g., perfluoropolyether films), metal-oxides, and/or carbon nanotubes.

GRIN LC lens 440 may also include a second alignment layer 466B facing first alignment layer 466A. In some examples, second alignment layer 466B may be formed in the same or similar manner as first alignment layer 466A and may include the same or similar materials (e.g., PI). Additionally or alternatively, second alignment layer 466B may include any other suitable materials formed using any suitable technique providing a surface configured to adequately align liquid crystal molecules within liquid crystal layer 442 in combination with first alignment layer 466A.

Liquid crystal layer 442 may be disposed between first and second alignment layers 466A and 466B, as illustrated in FIG. 4. Additionally, a gasket 469 may be disposed between first and second alignment layers 466A and 466B and may at least partially surround an outer periphery of liquid crystal layer 442. In some examples, gasket 469 may include spacers to maintain a selected space (i.e., LC cell space) between first and second alignment layers 466A and 466B such that liquid crystal layer 442 has a cell thickness suitable for proper operation, as described herein. Additional spacers may be included as needed between first and second alignment layers 466A and 466B to maintain a consistent space between the layers. Gasket 469 may provide an edge seal around liquid crystal layer 442 and may include any suitable adhesive and/or sealing agent to prevent leakage at the periphery.

In various examples, GRIN LC lens 440 may additionally include at least one common electrode 468 disposed between second alignment layer 466B and second lens substrate 456B. In one example, common electrode 468 may be formed as a unitary layer overlapping all or substantially all of liquid crystal layer 442, driving electrodes 458, and floating electrodes 464. In certain examples, GRIN LC lens 440 may include multiple common electrodes 468 that together cover or substantially cover liquid crystal layer 442. An electric field may be generated between common electrode 468 and driving electrodes 458 and/or floating electrodes 464 when selected voltages are applied to common electrode 468 and driving electrodes 458. In various examples, common electrode 468 may be held at a single selected voltage and, in combination with driving electrodes 458 and/or floating electrodes 464, may enable a range of voltage differentials to be selectively applied to regions of liquid crystal layer 442. Accordingly, driving electrodes 458 may, in combination with common electrode 468, generate variable electric fields that reorient liquid crystal molecules in liquid crystal layer 442 to produce a desired lens phase profile.

Driving electrodes 458, floating electrodes 464, common electrode 468, and bus line 462 may include one or more electrically conductive materials, such as a semiconductor (e.g., a doped semiconductor), metal, carbon nanotube, graphene, oxidized graphene, fluorinated graphene, hydrogenated graphene, other graphene derivatives, carbon black, transparent conductive oxides (TCOs, e.g., indium tin oxide (ITO), zinc oxide (ZnO), indium gallium zinc oxide (IGZO), etc.), conducting polymers (e.g., PEDOT), and/or other electrically conductive material. In some examples, the electrodes may include a metal such as nickel, aluminum, gold, silver, platinum, palladium, tantalum, tin, copper, indium, gallium, zinc, alloys thereof, and the like. Further example transparent conductive oxides include, without limitation, aluminum-doped zinc oxide, fluorine-doped tin oxide, indium-doped cadmium oxide, indium zinc oxide, indium zinc tin oxide, indium gallium tin oxide, indium gallium zinc oxide, indium gallium zinc tin oxide, strontium vanadate, strontium niobate, strontium molybdate, and calcium molybdate. In some examples, the electrodes and/or bus line may each include one or more layers, grids, nanowires, etc. of any suitable transparent conductive material, such as transparent conductive oxides, graphene, etc. Driving electrodes 458, floating electrodes 464, common electrode 468, and/or bus line 462 may have an optical transmissivity of at least approximately 50% (e.g., approximately 50%, approximately 60%, approximately 70%, approximately 80%, approximately 90%, approximately 95%, approximately 97%, approximately 98%, approximately 99%, or approximately 99.5%, including ranges between any of the foregoing values).

Electrode patterns for GRIN LC lenses, as disclosed herein, may be configured to produce desired lens profiles when operated. For example, modeling may be utilized to determine and/or optimize various design parameters, such as the shapes of the electrodes, the number of driving electrodes, the number of Fresnel reset regions, the types of resistors coupling adjacent electrodes, and/or the number of bus lines utilized to produce adequate lens shapes and provide a sufficient range of lens power while minimizing visual aberrations and delays in response time that might be perceptible to a wearer.

A "director," as used herein, may refer to an axis oriented in an average direction of long molecular axes of all liquid crystal molecules in a liquid crystal bulk or selected region thereof. Individual liquid crystal molecules may be more or less aligned with this directional axis. Accordingly, liquid crystal molecules, such as rod-like liquid crystal molecules, may be generally oriented such that their moments of inertia are roughly aligned along the director.

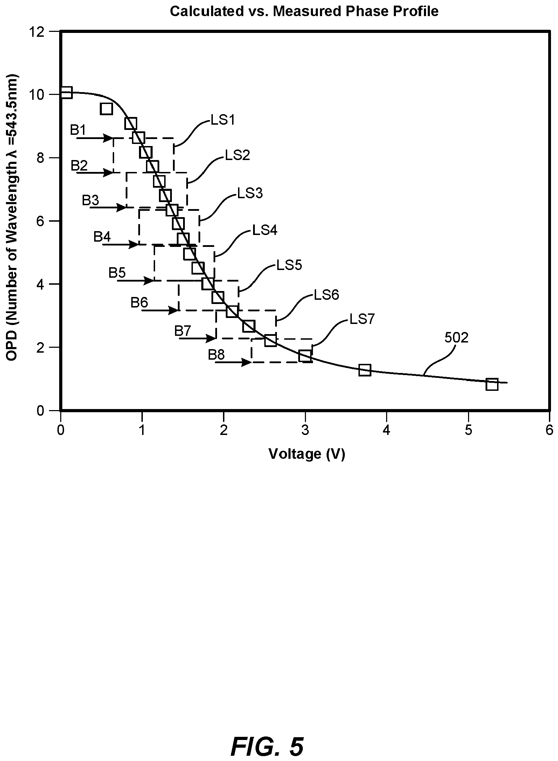

FIG. 5 is a plot illustrating a curve of optical path difference (OPD) versus voltage that may be utilized in director modeling to optimize certain design parameters of a GRIN LC lens as disclosed herein. In some examples, a liquid crystal relaxation method may be used to numerically calculate a director configuration at equilibrium. In this method, the calculation for the director configuration may be determined by minimizing the free energy for a given set of boundary conditions and external fields. This calculation may then be utilized to obtain the desired phase profile.

A GRIN LC lens design may include concentric ring-shaped electrodes (see, e.g., FIGS. 6A and 6B) with substantially identical areas to produce a parabolic phase profile or other suitable aspheric phase profile (e.g., elliptical, hyperbolic, etc.). With this electrode geometry, a parabolic phase may be obtained when the phase difference between adjacent electrodes is approximately the same. If the phase is proportional to the applied voltage, a linear change in the voltage across the electrodes (i.e., with approximately the same difference in voltage between any two electrodes) would yield a parabolic phase profile. To impose a linear voltage drop over several electrodes, inter-ring resistors can be utilized. The resistors between electrodes may act as voltage dividers. If the phase vs. voltage curve were in general linear, only two interconnections would be required to drive the lens. Additional resistive interconnections are utilized, however, to provide a curved phase profile, with more than three interconnections enabling a parabolic phase profile.

In various examples, the slope of optical path difference (OPD) vs. voltage curve 502 of a liquid crystal material, as disclosed herein, may not remain constant but may rather become substantially steeper at regions corresponding to lower voltage values. In at least one example, the nonlinearity of OPD vs. voltage curve 502 may be addressed by segmenting curve 502 into a number of different linear sections that together may better approximate the profile of curve 502 in a manner that has little or no impact on perceptible optical characteristics of the resulting GRIN LC lens. As shown in FIG. 5, curve 502 is broken up into a number of linear sections LS1-LS7 (boxes surround the relevant sections of curve 502 for ease of illustration). When utilizing resistors of approximately the same value between neighboring driving electrodes, in accordance with various examples, voltages in each region may be reliably defined by connections to a programmable voltage source at end points of linear segments LS1-LS7 shown in FIG. 5.

While seven linear sections are shown in the illustrated example, curve 502 may be segregated into any other suitable number of linear sections. The number of linear sections may determine the number of interconnections and bus lines required to drive the GRIN LC lens. In the example illustrated in FIG. 5, eight bus lines B1-B8, which are each supplied with a different voltage, are used to obtain linear voltage drops at linear sections LS1-LS7. Bus lines B1-B8 are shown at positions on curve 502 corresponding to voltage values that would be respectively applied to each of bus lines B1-B8. Each linear section has a linear drop in voltage between a driving electrode directly coupled to a higher voltage bus line and a driving electrode directly coupled to a lower voltage bus line. Resistors separating neighboring driving electrodes between the driving electrodes directly coupled to the bus lines may maintain a consistent voltage drop between the neighboring driving electrodes.

FIG. 6A illustrates a GRIN LC lens 640 that includes a driving electrode array 670 according to some examples. The illustrated driving electrode array 670 may represent a simplified patterned array presented for purposes of illustration, and various exemplary electrode arrays may include a greater number of driving electrodes and bus lines. As shown, driving electrode array 670 includes a plurality of driving electrodes 658 that are arranged in concentric rings surrounding a central, circular driving electrode 658(1). The areas covered by each of the plurality of driving electrodes 658 (i.e., the areas overlapping a corresponding liquid crystal layer) may be approximately the same. Hence, driving electrodes 658, most of which have a ring-shaped profile following an arcuate path (e.g., a circular path), may decrease in width as the electrode circumferences increase, proceeding from central driving electrode 658(1) outward. As shown, driving electrode array 670 may have a circular shape configured to overlap a circular-shaped liquid lens layer having approximately the same shape and dimensions. However, in some examples, driving electrode array 670 and GRIN LC lens 640 may have any other suitable profile shape, including a noncircular shape.

As shown in FIG. 6A, neighboring driving electrodes 658 are separated by ring-shaped gap regions 672 (see gap G1 in FIG. 4). Gap regions 672 may have widths of, for example, from approximately 0.5 µm to approximately 5 µm. Additionally, a separate resistor 674 may connect each pair of neighboring driving electrodes 658. The resistors 674 may enable each driving electrode 658 to be maintained at a different voltage when different voltages are applied via bus lines to two or more of driving electrodes 658. In some examples, consecutive resistors 674 may be located at different angular positions along driving electrode array 670. For example, neighboring resistors 674 may be separated by angular distances of from approximately 1° to approximately 10° or more.

In the example of FIG. 6A, three example bus lines BL1, BL2, and BL3 are illustrated. Bus lines BL1, BL2, and BL3 are each electrically coupled (i.e., directly coupled, connected, or otherwise attached electrically) to a different driving electrode 658. In the illustrated example, bus line BL1 is electrically coupled to the center-most driving electrode 658(1) and bus line BL3 is electrically coupled to a driving electrode 658(3) located at a more peripheral position. Bus line BL2 is electrically coupled to a driving electrode 658(2) disposed between driving electrodes 658(1) and 658(3) (i.e., between the center and outer periphery of driving electrode array 670). The plurality of driving electrodes 658 may produce a varying electric field in conjunction with one or more common lines disposed on an opposite side of an overlapping liquid crystal layer (see, e.g., common electrode 468 disposed on a side of liquid crystal layer 442 opposite driving electrodes 458, as shown in FIG. 4). The electric field generated between driving electrodes 658 and the overlapping common electrode(s) may produce selected alignments of liquid crystal molecules in the liquid crystal layer. In some examples, the common electrode(s) may be maintained at a particular voltage value, and variations in liquid crystal alignments may correspond to different voltages of overlapping driving electrodes 658.

In at least one example, a first voltage may be applied by bus line BL1 to driving electrode 658(1) and a lower or higher voltage may be applied by bus line BL3 to driving electrode 658(3). A voltage having a value between that of bus lines BL1 and BL3 may be applied by bus line BL2 to driving electrode 658(2). In some examples, voltages of driving electrodes 658 may decrease or increase linearly or substantially linearly between pairs of bus lines (see, e.g., linear sections LS1-LS7 between pairs of bus lines B1-B8 shown in FIG. 5). This may be accomplished by, for example, providing resistors 674 that have substantially the same value between each pair of neighboring driving electrodes 658. Accordingly, voltage drops between neighboring driving electrodes 658 located between two bus lines (e.g., between bus lines BL1 and BL2 and/or between bus lines BL2 and BL3) may be relatively consistent.

In at least one example, amounts of voltage drop or increase between adjacent driving electrodes 658 and/or between neighboring bus lines may be substantially constant. Because the radial width of driving electrodes 658 progressively decreases proceeding from the center of driving electrode array 670 outward, the voltage changes may likewise change at progressively smaller intervals proceeding radially outward. The decreasing radial intervals between driving electrodes 658 may result in progressively greater changes in liquid crystal orientation proceeding radially outward along the GRIN LC lens so that a selected lens curvature (e.g., a spherical curvature) is applied to light passing through the GRIN LC lens. For example, bus line BL1 may apply approximately 4 V to the center-most driving electrode 658(1) and bus line BL3 may apply approximately 0 V to the outer-most driving electrode 658(3). In this example, bus line BL2 may apply approximately 2 V to driving electrode 658(2), which is disposed at a location between driving electrodes 658(1) and 658(3). Driving electrode 658(2) may be located such that the number of driving electrodes 658 located between driving electrodes 658(1) and 658(2) is the same or nearly the same as the number of driving electrodes 658 located between driving electrodes 658(2) and 658(3). Any other suitable number, distribution, and/or configuration of driving electrodes 658 may be utilized in various examples.

In some examples, voltage drops between different pairs of bus lines may have different slopes so as to produce a desired lens profile in the GRIN LC lens. Any suitable combination of voltage values may be applied to bus line BL1-BL3 to produce selected electrical field gradients in an overlapping liquid crystal layer. For example, a total voltage drop between bus lines BL2 and BL3 may be more or less steep than a total voltage drop between bus lines BL1 and BL2.

FIG. 6B illustrates a GRIN LC lens 641 that includes a driving electrode array 670. The illustrated driving electrode array 670 may represent a simplified array and Fresnel layout presented for purposes of illustration, and various exemplary electrode arrays may include a greater number of driving electrodes, bus lines, and/or Fresnel reset sections. As shown, driving electrode array 670 includes a plurality of driving electrodes 658 that are arranged in concentric rings. As shown, driving electrode array 670 may have a circular shape configured to overlap a circular-shaped liquid lens layer having approximately the same shape and dimensions. However, in some examples, driving electrode array 670 and GRIN LC lens 641 may have any other suitable profile shape, including a noncircular shape.

Driving electrode array 670 may be divided into a plurality of Fresnel reset sections. In the example shown in FIG. 6B, driving electrode array 670 is divided into first and second Fresnel reset sections FS1 and FS2. Fresnel reset sections FS1 and FS2 may be utilized to generate Fresnel resets in a phase profile of GRIN LC lens 641, as discussed in greater detail below. Neighboring driving electrodes 658 may be separated by ring-shaped gap regions 672 and resistors 674 may connect pairs of neighboring driving electrodes 658 within each of Fresnel reset sections FS1 and FS2. An intermediate gap 676 may be defined between Fresnel reset sections FS1 and FS2. Unlike gap regions 672 disposed between adjacent driving electrodes 658 within each Fresnel reset section, electrodes in Fresnel reset sections FS1 and FS2 adjacent to intermediate gap 676 may not be electrically connected to each other via a resistor or other connector bridging the electrodes across intermediate gap 676. Accordingly, first and second Fresnel reset sections FS1 and FS2 may produce distinct voltage gradients in independently operable lens regions in GRIN LC lens 641.

In the example of FIG. 6B, three example bus lines BL1, BL2, and BL3 are illustrated. Bus lines BL1, BL2, and BL3 are each electrically coupled (i.e., directly coupled, connected, or attached electrically) to a different respective driving electrode 658 in each of first and second Fresnel reset sections FS1 and FS2. In the illustrated example, bus line BL1 is electrically coupled to each of driving electrodes 658(1A) and 658(1B), bus line BL2 is electrically coupled to each of driving electrodes 658(2A) and 658(2B), and bus line BL3 is electrically coupled to each of driving electrodes 658(3A) and 658(3B) located respectively within each of Fresnel reset sections FS1 and FS2. In at least one example, a first voltage may be applied by bus line BL1 to driving electrodes 658(1A) and 658(1B) and a lower or higher voltage may be applied by bus line BL3 to driving electrodes 658(3A) and 658(3B). A voltage having a value between that of bus lines BL1 and BL3 may be applied by bus line BL2 to driving electrodes 658(2A) and 658(2B).

Driving electrode array 670 may be utilized to provide GRIN LC lens 641 with a segregated Fresnel structure. The GRIN LC lens may include any appropriate type of Fresnel structure, such as a Fresnel zone plate lens including areas that have a phase difference of a half-wave to adjacent areas, a diffractive Fresnel lens having a segmented parabolic phase profile where the segments are small and can result in significant diffraction, or a refractive Fresnel lens having a segmented parabolic profile where the segments are large enough so that diffraction effects are minimized. Other structures may also be used.

In some examples, the driving electrode array 670 may be utilized in a refractive Fresnel GRIN LC lens having a segmented parabolic profile, where the segments are large enough that the resulting diffraction angle is smaller than the angular resolution of human eyes (i.e., diffraction effects are not observable by human eyes). Such a refractive Fresnel LC lens may be referred to as a segmented phase profile (SPP) LC lens.

For a positive thin lens, optical path difference (OPD) can be approximated with a Maclaurin series to a parabolic profile as shown in Equation (1) $OPD \left(r\right) = \frac{{r}^{2}}{2 f} ,$ where r is the lens radius (i.e., half of the lens aperture) and f is the focal length. The OPD of an LC lens is proportional to the cell thickness d and the birefringence Δn of the LC material as shown in Equation (2) $OPD = Δ n \times d \to d ∝ {r}^{2}$ The response time τ of an Electrically Controlled Birefringence (ECB) LC cell, which is the time the material requires to recover to its original state, is quadratically dependent on cell thickness d (τ ∝ r⁴) as shown in Equation (3) $τ = \frac{\left(γ\times {d}^{2}\right)}{\left({K}_{22}\times {π}^{2}\right)} ,$ where γ and K₂₂ are the rotational viscosity and the splay elastic constant of the LC material, respectively. As equations (1)-(3) show, there is typically a tradeoff between the aperture size and response time. Thus, designing a GRIN LC lens with large aperture and reasonable response time has conventionally presented challenges. In the disclosed examples, by introducing phase resets (i.e., Fresnel resets) in the parabolic phase profile, the aperture size of the LC lens may be increased without compromising the response time.

The total OPD step for a designed wavelength = *n* * *λ*, where % n is the number of waves in the designed wavelength. For a non-designed wavelength, the total OPD step may be the same, or lens power may be different for different wavelengths. However, Equation (4) shows a relation between OPD step for a designed wavelength and a non-designed wavelength: $n ∗ {λ}_{D} = n ∗ {λ}_{i} \pm φ ,$ where % n is the number of waves in the designed wavelength, λᵢ is the non-designed wavelength, and φ is the phase condition. For a half-wave, $φ = \frac{N}{2} {λ}_{i}$, *N* = 1, 3, 5, 7, ... . As a result, *n* * *λ_{D}* = $n ′ ∗ {λ}_{i} \pm \frac{1}{2} {λ}_{i} %$ for the first half-wave condition. Hence, half-wave condition wavelengths are *λᵢ* = $\frac{n ∗ {λ}_{D}}{n \pm \frac{N}{2}}$, *N* = 1, 3, 5, 7, ... % for all other half-wave conditions. As such, light having wavelengths of 790 nm, 668 nm, 579 nm, 511 nm, 457 nm, and 414 nm may cause a half-wave condition if a designed wavelength is 543.5 nm. Quarter-wave condition wavelengths are ${λ}_{i} = \frac{n ∗ {λ}_{D}}{n \pm \frac{N}{2}}$, *N* = 1, 3, 5, 7, ... %. Hence, light having wavelengths of 644 nm, 668 nm, 599 nm, 561 nm, 527 nm, 496 nm, and 470 nm may cause a quarter-wave condition if a designed wavelength is 543.5 nm.

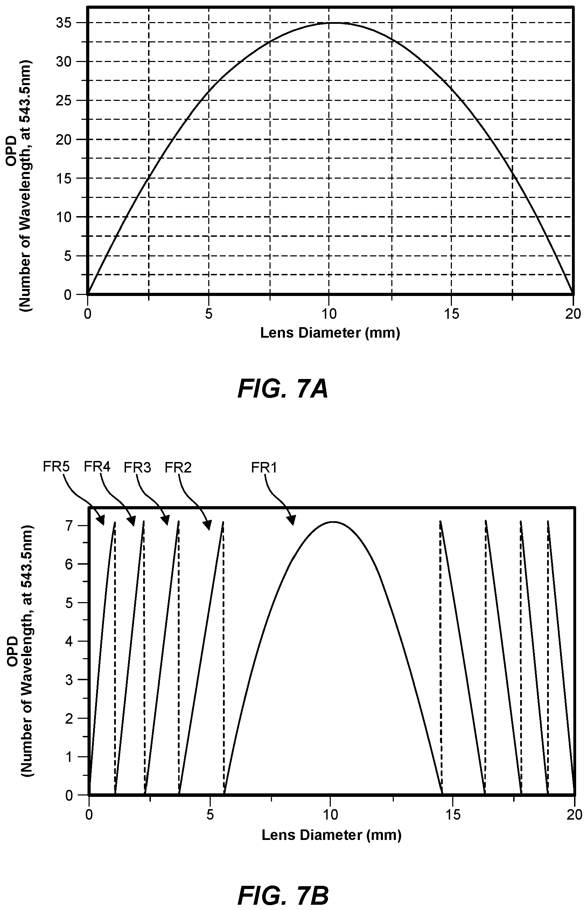

FIG. 7A illustrates an exemplary target parabolic phase profile for a ±0.375 Diopter (D) GRIN LC lens having a lens diameter of 20 mm, where the OPD equals to 35 λ. The thickness of the LC cell for this lens would be approximately 70 µm for LC materials having a birefringence value of 0.27. To decrease the effective thickness of the LC cell, Fresnel resets or segments may be introduced into the lens phase profile.

FIG. 7B illustrates a phase map of an exemplary GRIN LC lens having five Fresnel resets FR1-FR5 that together approximate the lens characteristics of the idealized phase profile of FIG. 7A. As shown, the centermost Fresnel reset FR1 may occupy a wide area surrounding the center of the GRIN LC lens. Additional Fresnel resets FR2-FR5 surrounding central Fresnel reset FR1 may have thicknesses that are sequentially reduced proceeding peripherally outward toward the lens periphery. For example, Fresnel reset FR2 may be radially thinner than Fresnel reset FR1. Additionally, Fresnel reset FR3 may be radially thinner than Fresnel reset FR2, Fresnel reset FR4 may be radially thinner than Fresnel reset FR3, and Fresnel reset FR5 may be radially thinner than Fresnel reset FR4. The phase profiles of each of Fresnel resets FR1-FR5 may likewise increase in conjunction with decreases in thickness of the resets. For example, Fresnel reset FR5 may have a steeper profile than Fresnel reset FR4, which has a steeper profile than Fresnel reset FR3. Fresnel reset FR3 may likewise have a steeper profile than Fresnel reset FR2, which has a steeper profile than central Fresnel reset FR1.

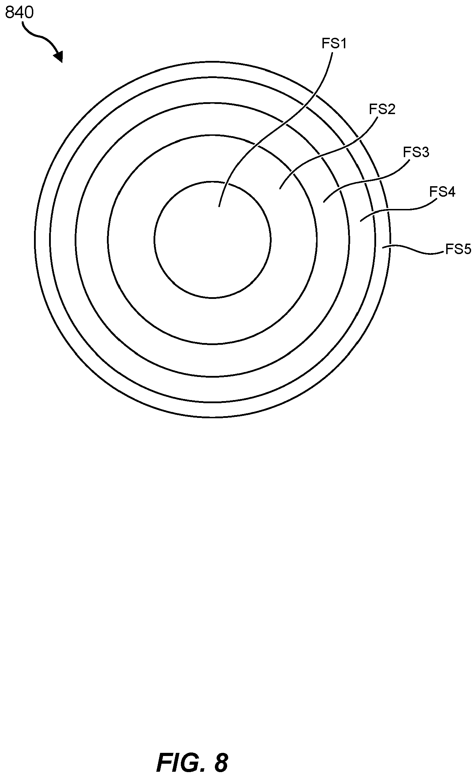

FIG. 8 illustrates an exemplary GRIN LC lens 840 that includes a plurality of concentric ring-shaped segments of increasing radii that are referred to as Fresnel reset sections. As shown in FIG. 8, GRIN LC lens 840 may have five Fresnel reset sections FS1-FS5 respectively corresponding to the five Fresnel resets FR1-FR5 mapped in FIG. 7B. As shown in FIG. 8, Fresnel reset section FS1 may be centrally located and Fresnel reset sections FS2-FS5 may concentrically surround Fresnel reset section FS1. For example, Fresnel reset section FS2 may circumferentially surround central Fresnel reset section FS1, Fresnel reset section FS3 may circumferentially surround Fresnel reset section FS2, Fresnel reset section FS4 may circumferentially surround Fresnel reset section FS3, and outermost Fresnel reset section FS5 may circumferentially surround Fresnel reset section FS4. In correspondence with variations in thicknesses of Fresnel resets FR1-FR5 as shown in FIG. 7B, FIG. 8 likewise shows that Fresnel reset sections FS1-FS5 may progressively decrease in radial thickness proceeding from the centermost Fresnel reset section FS1 outward.

The five Fresnel reset sections FS1-FS5 of GRIN LC lens 840 may enable the corresponding LC cell thickness of GRIN LC lens 840 to be reduced up to five times, resulting in an LC cell thickness as low as approximately 14 µm. Likewise, the response time of the illustrated GRIN LC lens may be improved by a factor of up to 25. That is, the introduction of the Fresnel resets in the GRIN LC lens phase profile may enable the optical power of GRIN LC lens 840 to be adjusted sufficiently fast to keep pace with human eye accommodation (e.g., accommodation may occur in approximately 300 ms) such that the vergence-accommodation conflict may be substantially or fully resolved. The number of Fresnel resets/segments in a particular lens may be determined based on specific configurations of the Fresnel structure and the GRIN LC lens requirements, such as the desired optical power, lens aperture, switching time, and/or image quality of the GRIN LC lens.

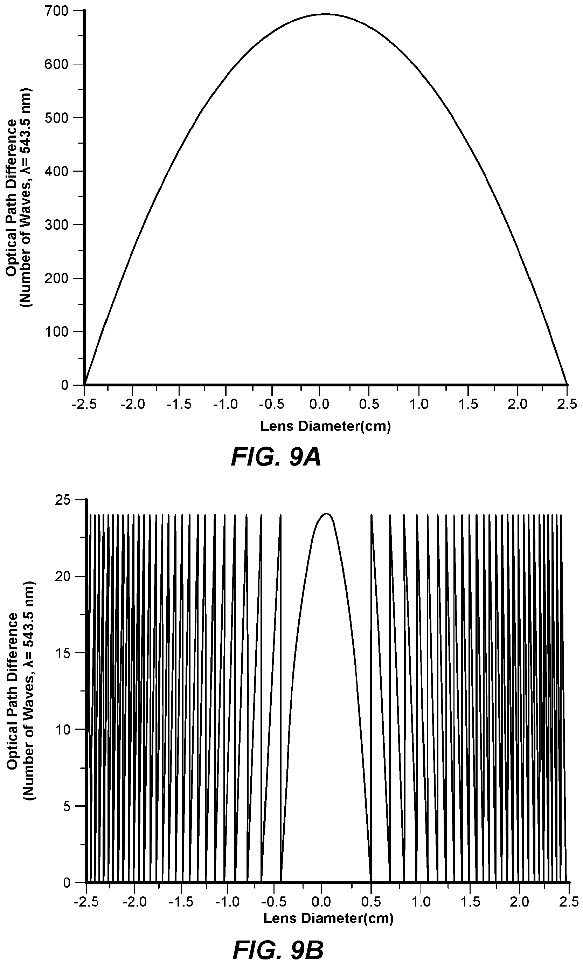

FIG. 9A illustrates an exemplary target parabolic phase profile for a GRIN LC lens having a greater width and focal range than that shown in FIG. 7A. For example, the GRIN LC lens mapped in FIG. 9A has a focal range of ± 1.20 D, a lens diameter of 50 mm (5.0 cm), and an OPD that equals to approximately 700 λ for a green wavelength of approximately 543.5 nm.

FIG. 9B illustrates a phase map of an exemplary GRIN LC lens having a total of 28 Fresnel resets that together approximate the lens characteristics of the idealized phase profile of FIG. 9A. A large number of phase steps within one wavelength of OPD (i.e., a large number of phase steps per wavelength) may be desired to produce a more accurate representation of an idealized phase profile. The 28 Fresnel resets may enable a substantial reduction in the LC cell thickness and improvement in response time. To configure a GRIN LC lens with negligible diffraction angle for near eye applications, the minimum width of Fresnel reset sections of the GRIN LC lens may be selected to be larger than 1.03 mm. The resets may be formed in a single GRIN LC layer (e.g., a 60 µm thick layer) or distributed in multiple stacked GRIN LC layers (e.g., three stacked 20 µm thick layers). In some examples, GRIN LC layers may be stacked to further improve the response time of the overall GRIN LC lens. By way of example, a pair of optically coupled GRIN LC lens layers, with each layer having five resets in their phase profile, may enable the resulting LC cell thickness to be reduced up to 10 times (5 resets multiplied by 2 layers) and, accordingly, the response speed may be improved by a factor of approximately 100.

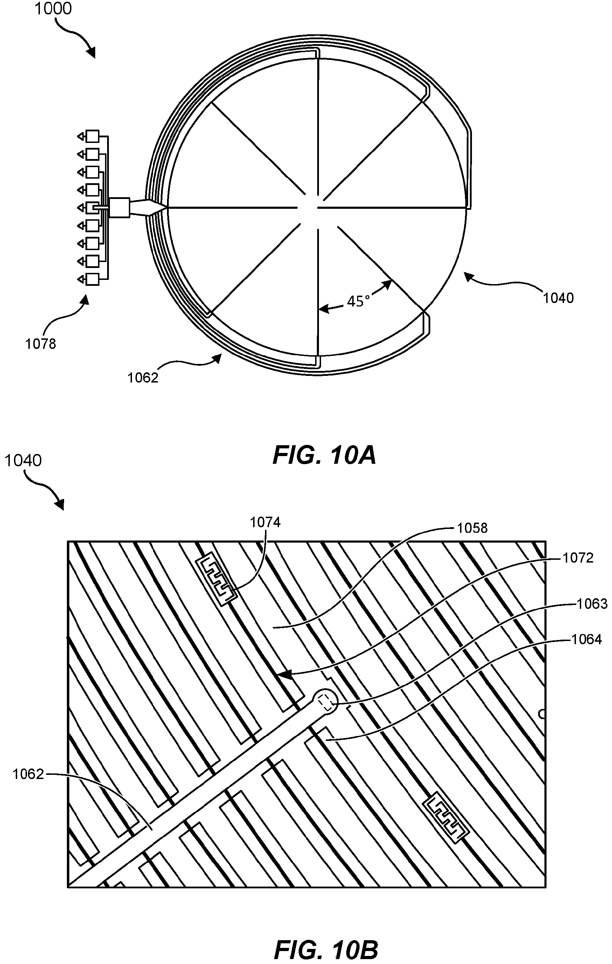

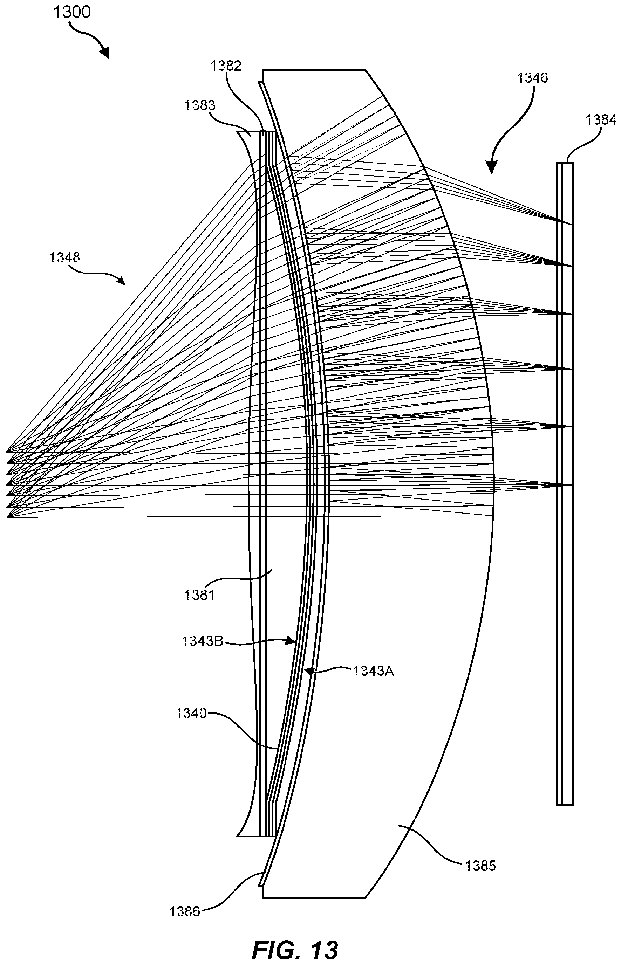

FIGS. 10A and 10B show a GRIN LC system 1000 and GRIN LC lens 1040 that includes an electrode array and bus lines according to various examples. As shown in FIG. 10A, GRIN LC system 1000 includes a plurality of bus lines 1062 that are electrically coupled to driving electrodes of GRIN LC lens 1040. For example, GRIN LC system 1000 may include eight bus lines 1062 as shown, with each of the eight bus lines 1062 lines being disposed at a different angular position about GRIN LC lens 1040. The bus lines 1062 may, for example, be evenly spaced apart from each other at regular angular intervals of approximately 45°, with each bus line extending from a peripheral position towards the center of GRIN LC lens 1040. Accordingly, portions of bus lines 1062 on GRIN LC lens 1040 may extend along radial lines located at angular positions of approximately 0°, 45°, 90°, 135°, 180°, 225°, 270°, and 315°. While GRIN LC lens 1040 shown in FIG. 10A has a substantially circular profile, GRIN LC lens 1040 may alternatively have any other suitable non-circular shape in various examples. Bus lines 1062 may extend between GRIN LC lens 1040 and terminals 1078, which may be connected to an external voltage source and controller (see, e.g., virtual reality engine 1345 in FIG. 13) that is configured to apply different voltages to terminals 1078 and corresponding bus lines 1062. Additionally, at least one of terminals 1078 may be coupled, via another bus line, to a common electrode (see, e.g., common electrode 468 in FIG. 4) and may apply a common voltage to the common electrode.

FIG. 10B shows a close-up view of a portion of GRIN LC lens 1040 illustrated in FIG. 10A. As shown, GRIN LC lens 1040 may include a plurality of concentrically arranged driving electrodes 1058 that are separated from each other by gap regions 1072 (see, e.g., gap G1 in FIG. 4; see also gap regions 672 in FIGS. 6A and 6B). Adjacent driving electrodes 1058 may be electrically coupled to each other by resisters 1074 that bridge the intervening gap regions 1072 to maintain a selected voltage drop(s) between the driving electrodes 1058. Additionally, concentrically arranged floating electrodes 1064 may be disposed over portions of driving electrodes 1058 so as to overlap gap regions 1072 disposed between adjacent driving electrodes 1058. A portion of a bus line 1062 coupled to one of the illustrated driving electrodes 1058 is shown in FIG. 10B. As shown, bus line 1062 is electrically coupled to a driving electrode 1058 by a via interconnect 1063 extending directly between bus line 1062 and the corresponding driving electrode 1058. Bus line 1062 shown in FIG. 10B may be separated from other driving electrodes 1058 by an insulating layer (see, e.g., insulating layer 460 in FIG. 4).

In some examples, each bus line 1062 may be coupled to a corresponding driving electrode 1058 within each of a plurality of Fresnel reset sections (see, e.g., Fresnel reset sections FS1 and FS2 in FIG. 6B; see also Fresnel reset sections FS1-FS5 in FIG. 8). For example, each bus line 1062 may extend from an outer periphery of the driving electrode array of GRIN LC lens 1040 towards a center of GRIN LC lens 1040. Accordingly, in this example, each bus line 1062 may cross over each of a plurality of concentric Fresnel reset sections. Via interconnects, such as via interconnect 1063 shown in FIG. 10B, may electrically couple each bus line 1062 to a corresponding driving electrode 1058 within each respective Fresnel reset section. Accordingly, the eight bus lines 1062 shown in FIG. 10A may be configured to simultaneously apply voltages to corresponding driving electrodes 1058 within each of a plurality of Fresnel reset sections.

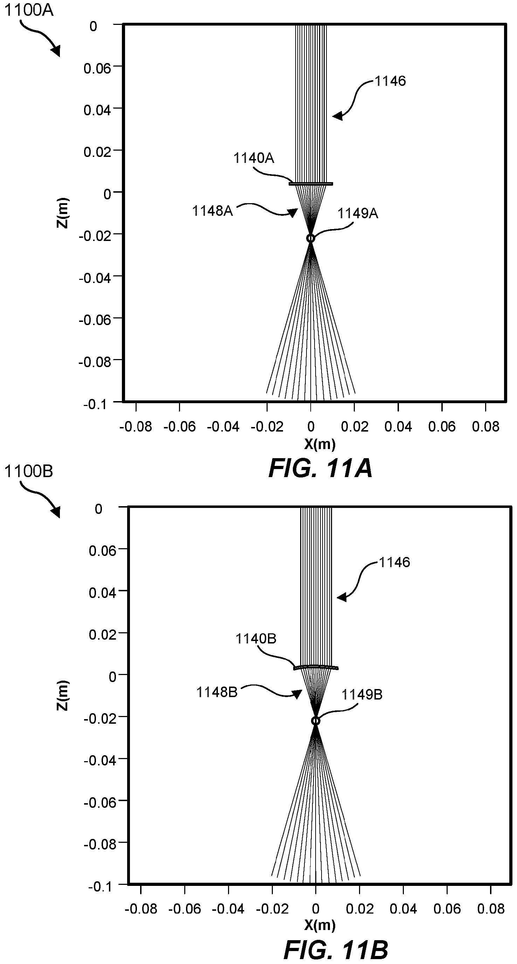

FIGS. 11A and 11B illustrate light paths through different GRIN LC lenses. For purposes of comparison, a system 1100A including a flat GRIN LC lens 1140A is shown in FIG. 11A and a system 1100B including a curved GRIN LC lens 1140B is shown in FIG. 11B.

As illustrated in FIG. 11A, light passing through flat GRIN LC lens 1140A may be focused at a focal point (see also FIG. 3). For example, incident light 1146, such as light from a display screen or projector, may pass through flat GRIN LC lens 1140A, where it is refracted and emitted as exiting light 1148A. As shown, exiting light 1148A may be focused at a focal point 1149A that is located at a distance of approximately 25.0 mm from an exit surface of flat GRIN LC lens 1140A.

As illustrated in FIG. 11B, light passing through curved GRIN LC lens 1140B may be focused at a similar focal point as that illustrated in FIG. 11A. As shown in FIG. 11B, incident light 1146 may pass through curved GRIN LC lens 1140B, where it is refracted and emitted as exiting light 1148B. As shown in FIG. 11B, exiting light 1148B may be focused at a focal point 1149B that is located at a distance of approximately 25.7 mm from an exit surface of curved GRIN LC lens 1140B. As shown, a curved GRIN LC lens 1140B may be utilized with relatively little impact to a focal length of the lens in comparison to a comparably sized flat GRIN LC lens 1140A.

In various examples, a curved GRIN LC lens may include one or more curved surfaces, such as a pair of curved surfaces including an incident side surface and an exit side surface. Additionally, in at least one example, layers within the curved GRIN LC lens may also be curved. For example, a liquid crystal layer and/or one or more substrates abutting the liquid crystal layer may also follow curved profiles.

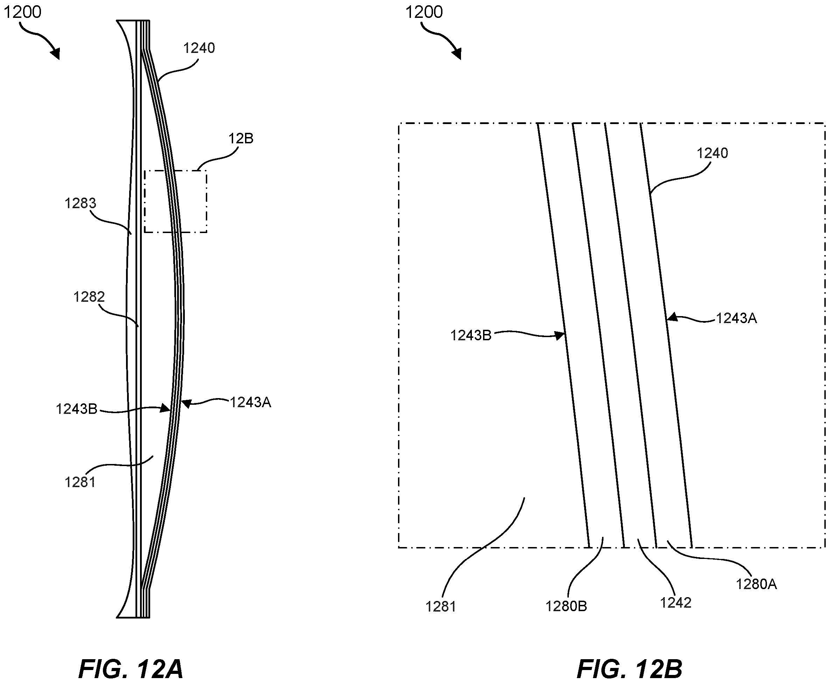

FIGS. 12A and 12B show a lens system 1200 that includes a GRIN LC module 1240 (i.e., a GRIN LC lens module), according to at least one example. GRIN LC module 1240 may function as a lens that focuses and/or otherwise redirects light, in accordance with any of the disclosed examples. GRIN LC module 1240 may be positioned overlapping one or more additional components of lens system 1200. For example, as illustrated in FIG. 12A, GRIN LC module 1240 may overlap an eye-tracking module 1282 for tracking eye position and eye movement of a user of lens system 1200. Additionally or alternatively, GRIN LC module 1240 may overlap a prescription lens member 1283 that may optionally be included to provide prescription optical correction specific to a particular user.

In some examples, at least a portion of GRIN LC module 1240 may abut at least a portion of eye-tracking module 1282 and/or prescription lens member 1283. For example, as shown in FIG. 12A, a peripheral portion of GRIN LC module 1240 may have a flat, annular profile abutting eye-tracking module 1282. An intermediate region 1281 may be located between at least a portion of 1240 (e.g., a central region of GRIN LC module 1240) and at least one of eye-tracking module 1282 and prescription lens member 1283. Intermediate region 1281 may include an air gap defined between GRIN LC module 1240 and an adjacent member, such as GRIN LC module 1240. Additionally or alternatively, intermediate region 1281 may include a solid, optically clear support and/or lens member on which GRIN LC module 1240 is laminated and/or otherwise affixed.

FIG. 12B shows a portion of lens system 1200 illustrated in FIG. 12A. As illustrated, GRIN LC module 1240 may have an incident side surface 1243A on which light from a display screen and/or projector is incident and enters GRIN LC module 1240. Additionally, GRIN LC module 1240 may include an exit side surface 1243B through which light from GRIN LC module 1240 exits towards a user's eyes. In various examples, incident side surface 1243A may be a convex surface and exit side surface 1243B may be a concave surface. In the example shown, exit side surface 1243B may face intermediate region 1281. According to at least one example, intermediate region 1281 may include a solid optical member having a surface shape that is complementary to a shape of exit side surface 1243B, thereby facilitating lamination and/or coupling of incident side surface 1243A to intermediate region 1281.

As shown in FIG. 12B, GRIN LC module 1240 may include a liquid crystal layer 1242 disposed between a first substrate 1280A and a second substrate 1280B. According to various examples, incident side surface 1243A may be formed on first substrate 1280A, which may follow a curved path. Additionally, exit side surface 1243B may be formed on second substrate 1280B, which may also follow a curved path. Liquid crystal layer 1242 may follow a curved path between first substrate 1280A and second substrate 1280B, with liquid crystal layer 1242 having a substantially constant thickness between first substrate 1280A and second substrate 1280B.

First substrate 1280A and/or second substrate 1280B may include various electrical components and layers (e.g., alignment layers, insulation layers, etc.) for driving and orienting liquid crystal molecules in liquid crystal layer 1242 to produce a desired lensing effect on light passing through liquid crystal layer 1242. Wiring, electrodes, and various electronic components and layers within first substrate 1280A and second substrate 1280B may be laid out along a curved path conforming to the corresponding curved shape of first substrate 1280A and/or second substrate 1280B.

Incident side surface 1243A and exit side surface 1243B may each have any suitable curved shape. In some examples, incident side surface 1243A and/or exit side surface 1243B may have a partial spherical shape with a radius of curvature that is greater than 0 mm and less an infinity (i.e., not planar). For example, incident side surface 1243A and/or exit side surface 1243B may have a radius of curvature of between approximately 10 mm and approximately 1000 mm (e.g., approximately 10 mm, approximately 20 mm, approximately 30 mm, approximately 40 mm, approximately 50 mm, approximately 60 mm, approximately 70 mm, approximately 80 mm, approximately 90 mm, approximately 100 mm, approximately 150 mm, approximately 200 mm, approximately 250 mm, approximately 300 mm, approximately 350 mm, approximately 400 mm, approximately 450 mm, approximately 500 mm, approximately 600 mm, approximately 700 mm, approximately 800 mm, approximately 900 mm, approximately 1000 mm).

In various examples, the increased curvature of portions of GRIN LC module 1240, particularly incident side surface 1243A, in comparison to a flat GRIN LC lens, may decrease an angle of incidence of light impacting and/or passing through GRIN LC module 1240. For example, an angle of incidence for a curved GRIN LC lens, as described herein, may be approximately 20° at a max field of view of 48°. In contrast, an angle of incidence for a conventional flat GRIN LC lens may only be approximately 34° at a max field of view of 48°. The angle of incidence of the incoming light may thus be improved significantly with curved GRIN LC lens modules.

This reduction in angle of incidence may be particularly substantial when the incident light is directed toward GRIN LC module 1240 by another optical member, such as a pancake lens, having a larger diameter than GRIN LC module 1240. Reducing the angle of incidence of light entering GRIN LC module 1240 may reduce undesired scattering and/or diffraction of light. Such reductions in light scattering and/or diffraction may be particularly noticeable near peripherally outer regions of GRIN LC module 1240, where Fresnel reset sections may be narrower and more closely clustered.

FIG. 13 illustrates a display system 1300 that includes a display screen 1384 and a pancake lens 1385 that are optically aligned with a curved GRIN LC module 1340 (see also GRIN LC module 1240 in FIGS. 12A and 12B). As shown in this figure, GRIN LC module 1340 may overlap one or more additional components of lens system 1300. For example, as illustrated in FIG. 13, GRIN LC module 1340 may overlap an eye-tracking module 1382 and a prescription lens member 1383 on a light exit side (i.e., facing exit side surface 1343B).

As additionally shown in FIG. 13, GRIN LC module 1340 may also overlap a pancake lens 1385 positioned on a light incident side (i.e., facing incident side surface 1343A). Pancake lens 1385 may have a curved lens shape, with a concave surface disposed near and/or facing convex incident side surface 1343A of GRIN LC module 1340. A convex surface of pancake lens 1385 may face towards display screen 1384 such that light 1346 emitted from display screen 1384 is incident on the convex surface. Pancake lens 1385 may receive light 1346 from display screen 1384 and may internally reflect and direct the received light such that exiting light is directed toward GRIN LC module 1340, where the light from pancake lens 1385 is received at incident side surface 1343A.

In order to reflect the light correctly and avoid image artifacts, the polarization state of light within pancake lens 1385 may be precisely controlled. In some examples, a polarizer 1386 may be disposed at or near the exit-side surface of pancake lens 1385 such that polarizer 1386 is positioned between pancake lens 1385 and GRIN LC module 1340. In at least one example, polarizer 1386 may be laminated to the concave exit surface of pancake lens 1385. Polarizer 1386 may ensure that light passing from pancake lens 1385 to GRIN LC module 1340 is properly polarized, thus facilitating suitable lensing of the light during passage through GRIN LC module 1340.

Light 1348 exiting GRIN LC module 1340 may pass through an intermediate region and/or through eye-tracking module 1382 and prescription lens member 1383. Intermediate region 1381 may include an air gap defined between GRIN LC module 1340 and an adjacent member, such as eye-tracking module 1382 and/or prescription lens member 1383. Additionally or alternatively, intermediate region 1381 may include a solid, optically clear support and/or lens member on which GRIN LC module 1340 is laminated and/or otherwise affixed. GRIN LC module 1340 may focus light 1348 towards an eye-box of a display device, with prescription lens member 1383 and/or another optical element further adjusting the image as needed to meet a particular user's need.

Because light from pancake lens 1385 is directed towards GRIN LC module 1340 at various inward sloping angles, the curved shape of incident side surface 1343A of GRIN LC module 1340 may allow such incoming light to be received at incident side surface 1343A with a decreased angle of incidence in comparison to more conventional flat GRIN LC lens modules. Accordingly, undesired scattering and/or diffraction of light may be significantly reduced, particularly near peripherally outer regions of GRIN LC module 1340, where Fresnel reset sections may be narrower and more closely clustered.

FIG. 13 illustrates an example of a display system 1300 that utilizes monolithic integration of functional components inside of a pancake lens cavity, with no additional air-immersed elements. This integrated structure may result in minimal impact on an eye-relief region, while significantly reducing stray light directed to a user's eyes. The illustrated configuration may also have simpler coating requirements than conventional GRIN LC systems.

While GRIN LC module 1340 module is shown and discussed, a switch liquid crystal module or any other suitable type of liquid crystal module may optionally be utilized in conjunction with components of the illustrated system 1300. GRIN LC module 1340, or any other module used in place of GRIN LC module 1340, may have a center thickness of approximately 3 mm or less. GRIN LC module 1340 may be integrated within the cavity of pancake lens 1385 using lamination, bonding, or any other suitable method. In some examples, GRIN LC module 1340 may be connected to a driving circuit using flex cables and/or any other suitable electronic connection. Any other suitable elements may also be included within and/or adjacent to the cavity of pancake lens 1385, such as, for example, an eye-tracking illumination module, an eye-tracking imaging module, color-correction films (e.g., chromatic aberration correction/Pancharatnam-Berry phase films), one or more additional liquid crystal modules (e.g., additional GRIN LC modules), and/or any other planar component or layer that provides functional value to display system 1300.

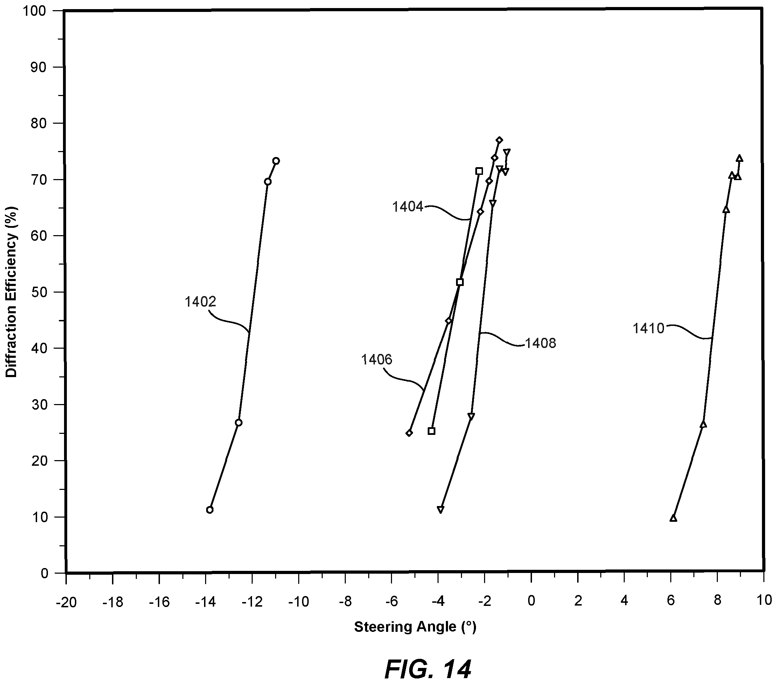

FIG. 14 illustrates diffraction efficiency of light at various wavelengths and incident angles versus steering angle for a GRIN LC lens module (e.g., GRIN LC module 1240 in FIG. 12A). In this figure, line 1402 represents light at a fly-back region of a phase profile. A fly-back region may represent a portion of the GRIN LC lens module where light is diffracted, reflected, diffused, and/or otherwise scattered in undesired directions. Such fly-back regions may be located at and/or near transition regions located at junctions between adjacent Fresnel reset sections (see, e.g., Fresnel resets FR1-FR5 in FIG. 7B and Fresnel reset sections FS1-FS5 in FIG. 8; see also FIG. 9B). In some examples, voltages at transition regions between Fresnel resets may change abruptly and significantly between a higher and a lower voltage. The dramatic voltage discrepancies at transition regions may result in substantial variations in electric field and liquid crystal orientations at and/or near the transition regions, producing undesirable light scattering at these locations. As shown by line 1402 in FIG. 14, a large, negative steering angle is required to obtain a suitable diffraction efficiency.

Line 1404 represents light having a wavelength of 400 nm that enters the GRIN LC lens at an incident angle of 0°. Line 1406 represents light having a wavelength of 400 nm that enters the GRIN LC lens at an incident angle of 10°. Line 1408 represents light having a wavelength of 400 nm that enters the GRIN LC lens at an incident angle of -10°. Line 1410 represents light having a wavelength of 450/470 nm that enters the GRIN LC lens at an incident angle of 0°.

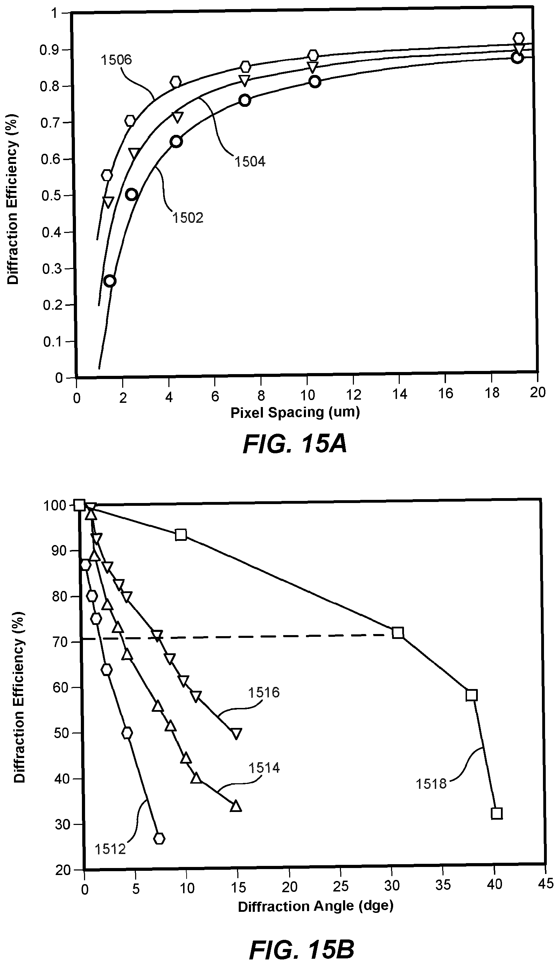

FIGS. 15A and 15B illustrate diffraction angle versus pixel pitch as a function of angle of incidence and wavelength of incoming light for a GRIN LC lens module. In FIG. 15A, finite-difference time-domain (FDTD) analysis was used to map points and fitted curves illustrating a relation between diffraction efficiency and pixel spacing for various GRIN LC lenses. Curve 1502 represents data obtained with a GRIN LC lens having a refractive index (dn) of 0.2 and a display screen with pixel diameters of 6 µm, curve 1504 represents data obtained with a GRIN LC lens having a refractive index of 0.35 and a display screen with pixel diameters of 3 µm, and curve 1506 represents data obtained with a GRIN LC lens having a refractive index of 0.35 and a display screen with pixel diameters of 2.5 µm. As shown, increasing pixel spacing and decreasing pixel diameter may substantially improve diffraction efficiency, with higher refractive index materials performing better overall.

FIG. 15B illustrates diffraction efficiency versus diffraction angle (dge) for various GRIN LC lens materials. Curve 1512 represents data obtained with a GRIN LC lens having a relatively low refractive index, curve 1514 represents data obtained with a GRIN LC lens having a relatively high refractive index, and curve 1516 represents data obtained with a GRIN LC lens having a relatively high refractive index along with optimization to further improve diffraction efficiency. Curve 1518 represents data for an ideal liquid crystal spatial light modulator (LC SLM), which maintains a significantly higher diffraction efficiency than other LC lens modules when diffraction angle is increased. As shown in FIG. 15B, improvements in diffraction efficiency may be obtained with increases in refractive index of the GRIN LC materials and/or with optimization of the GRIN LC lens. In various examples, such optimization may be realized using GRIN LC lenses having curved surfaces, as disclosed herein.

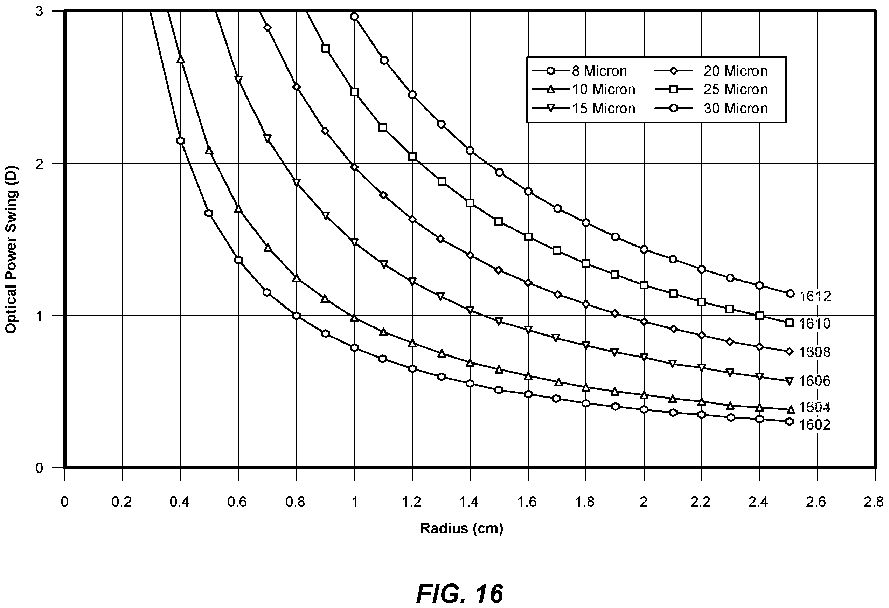

FIG. 16 illustrates optical power swing (in diopters, D) versus lens radius (in centimeters) for various GRIN LC lens thicknesses. As shown, curve 1602 represents a GRIN LC lens having a thickness of 8 µm, curve 1604 represents a GRIN LC lens having a thickness of 10 µm, curve 1606 represents a GRIN LC lens having a thickness of 15 µm, curve 1608 represents a GRIN LC lens having a thickness of 20 µm, curve 1610 represents a GRIN LC lens having a thickness of 25 µm, and curve 1612 represents a GRIN LC lens having a thickness of 30 µm. As illustrated in FIG. 16, achievable optical power swing may be obtained by increasing the thickness of the GRIN LC lens.

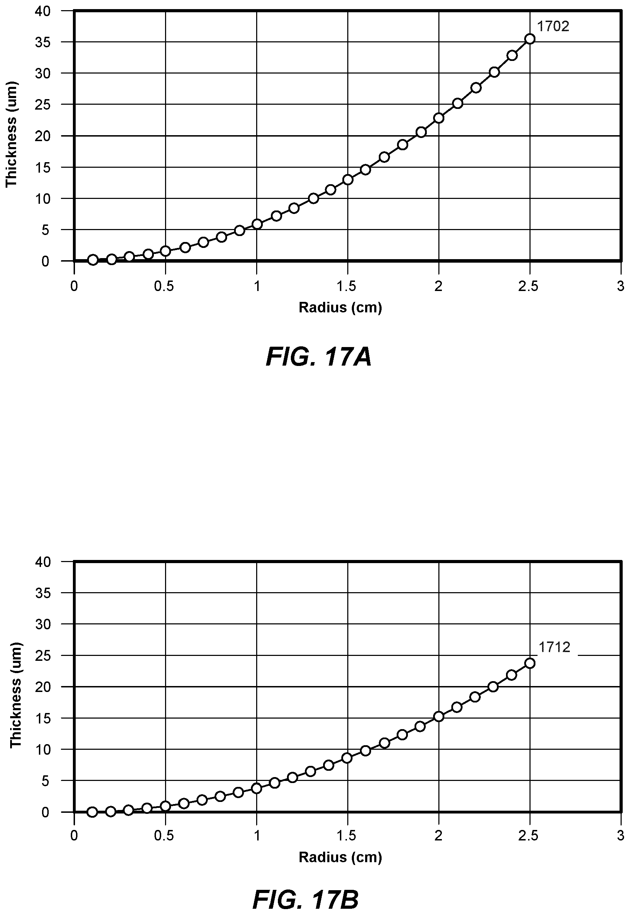

FIGS. 17A and 17B illustrate thickness (in µm) versus radius (in cm) for 1 cell and 2 cell GRIN LC lenses, respectively. In FIG. 17A, curve 1702 represents a GRIN LC lens that includes 1 cell with 56 Fresnel resets and that enables up to a 3 diopter (D) optical swing. FIG. 17B shows a curve 1712 that represents a GRIN LC lens that includes 2 cells, each with 28 Fresnel resets, and that allows for up to a 2 diopter (D) optical swing. As illustrated, a GRIN LC lens having two cells may be thinner than a GRIN LC lens having a single cell only.

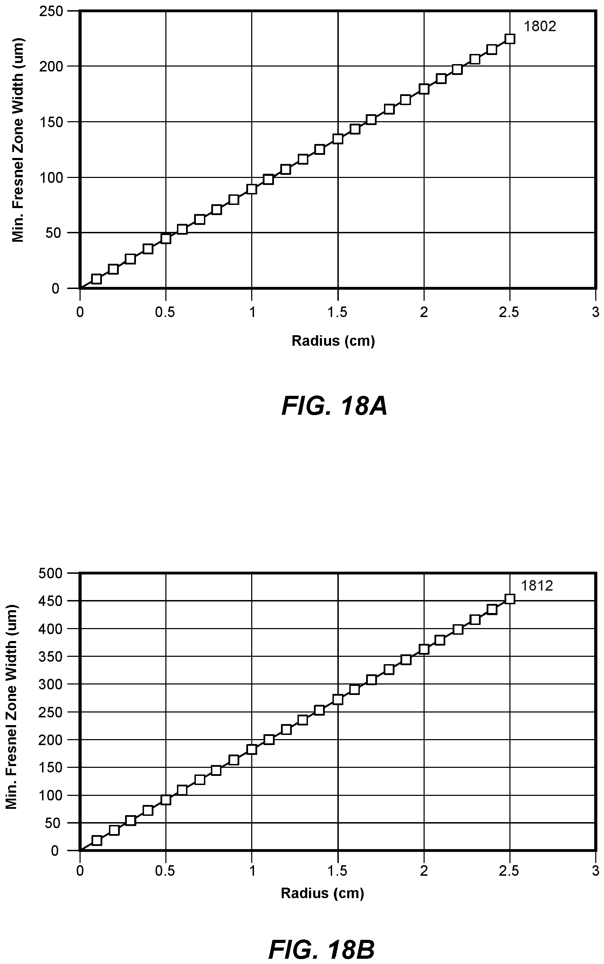

FIGS. 18A and 18B illustrate minimum Fresnel zone width (in µm) versus radius (in cm) for 1 cell and 2 cell GRIN LC lenses, respectively. In FIG. 18A, line 1802 represents a GRIN LC lens that includes 1 cell with 56 Fresnel resets and that enables up to a 3 diopter (D) optical swing. FIG. 18B shows a line 1812 that represents a GRIN LC lens that includes 2 cells, each with 28 Fresnel resets, and that allows for up to a 2 diopter (D) optical swing. As illustrated, a GRIN LC lens having a single cell may have minimum Fresnel zone widths that are less than a GRIN LC lens having two cells. In the examples illustrated, FIG. 18A shows a minimum Fresnel zone width of 230 µm for a 50 mm diameter GRIN LC lens in comparison to FIG. 18B, which shows a minimum Fresnel zone width of 450 µm for a 50 mm diameter GRIN LC lens.

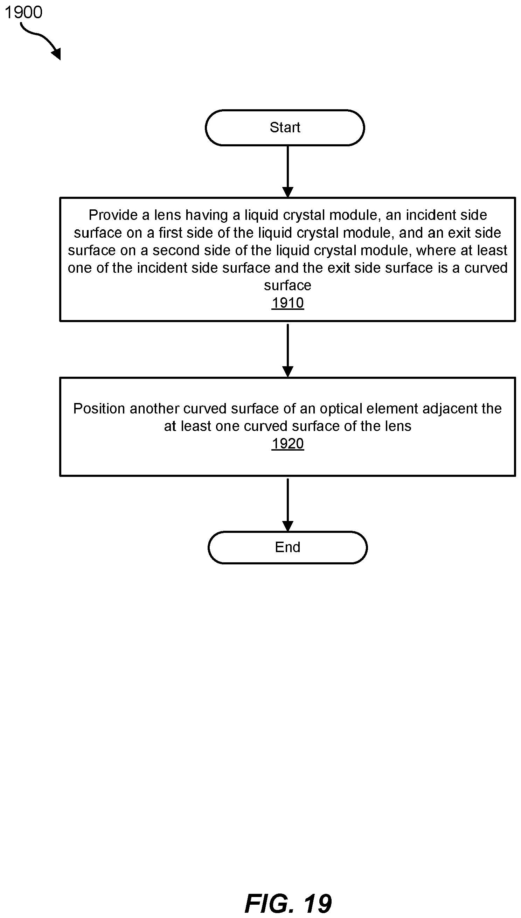

FIG. 19 is a flow diagram of an exemplary method 1900 for manufacturing a GRIN LC system in accordance with examples of this disclosure. As illustrated in FIG. 19, at step 1910, a lens may be provided, the lens including a liquid crystal module, an incident side surface on a first side of the liquid crystal module, and an exit side surface on a second side of the liquid crystal module, where at least one of the incident side surface and the exit side surface comprises a curved surface. A lens system 1300 may, for example, include a GRIN LC module 1340 having a liquid crystal layer 1342 disposed between first and second substrates 1380A and 1380B (see FIG. 13; see also FIGS. 12A and 12B). A curved incident side surface 1343A may be disposed on a first side and a curved exit side surface 1343B may be disposed on a second side of GRIN LC module 1340.

At step 1920 in FIG. 19, another curved surface of an optical element may be positioned adjacent the at least one curved surface of the lens. For example, as shown in FIG. 13, a concave surface of pancake lens 1385 and polarizer 1386 may be positioned adjacent convex incident side surface 1343A of GRIN LC module 1340. In some examples, method 1900 may further include positioning a display screen such that light emitted from the display screen passes through the optical element to the lens. In some examples, the optical element may include a second lens.

GRIN LC lenses with curved surfaces, as described herein, may have reduced light scattering, particularly in fly-back regions between Fresnel reset zones. Accordingly, GRIN LC lens systems, as described herein, may not require the inclusion of a dark masking layer or other image noise blocking layer to reduce undesirable light scattering. Optical characteristics of GRIN LC lenses having Fresnel resets may thus be improved, resulting in reduced light scattering and increased clarity in comparison to other lenses. Thus, visible lines, such as those evident on a dark masking layer, may not be present in the disclosed lens systems. Accordingly, the lens systems described herein may have minimal space requirements while providing high quality display characteristics, making them suitable for use in a variety of display systems, including various head-mounted display systems.

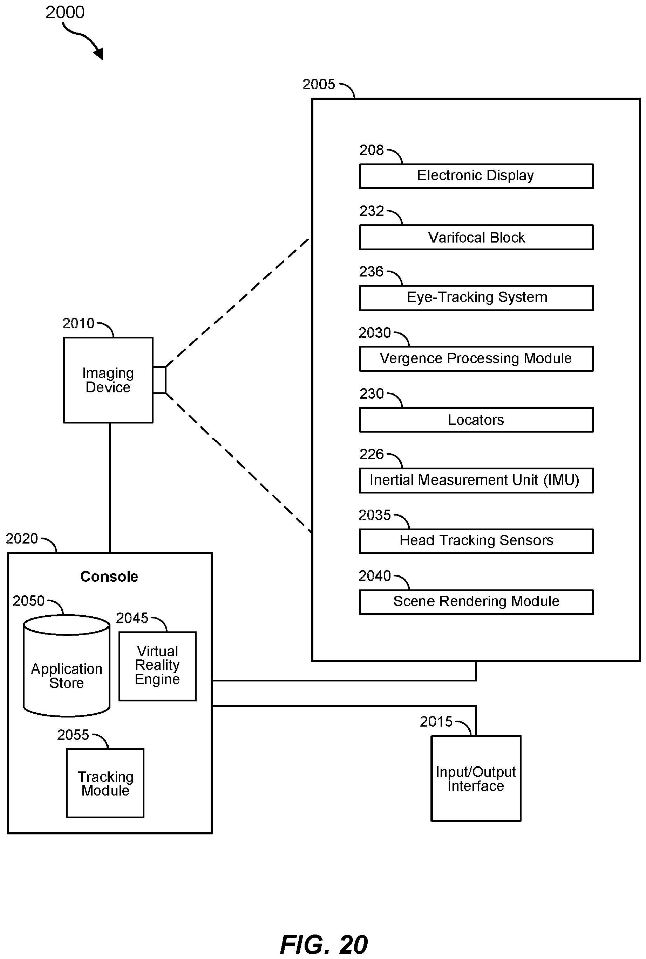

FIG. 20 illustrates an exemplary varifocal system 2000 that includes various aspects of disclosed examples. Varifocal system 2000 may be used for a virtual reality system, an augmented reality system, a mixed reality system, or some combination thereof. As shown in FIG. 20, varifocal system 2000 may include an imaging device 2010, a console 2020, an input/output interface 2015, and a head-mounted display (HMD) 2005. Although FIG. 20 shows a single HMD 2005, a single imaging device 2010, and a single input/output interface 2015, any suitable number of these components/subsystems may be included in varifocal system 2000. HMD 2005 may act as a virtual reality, augmented reality, and/or a mixed reality HMD. Various components and/or subsystems of varifocal system 2000 may be physically separated or combined together within a common device and/or assembly. For example, two or more of imaging device 2010, console 2020, input/output interface 2015, and head-mounted display (HMD) 2005 may be combined within an HMD assembly that is worn on a user's head.

HMD 2005 may present content to a user. In some examples, HMD 2005 may be an example of HMD 200 described above with reference to FIGS. 2A and 2B. Example content includes images, video, audio, or some combination thereof. Audio content may be presented via a separate device (e.g., speakers and/or headphones) external to HMD 2005 that receives audio information from HMD 2005, console 2020, or both. HMD 2005 may include an electronic display 208, a varifocal block 232 having one or more GRIN LC lenses as disclosed herein (see, e.g., FIGS. 3-14B), and an eye-tracking system 236 (described above with reference to FIG. 2B). Additionally, HMD 2005 may include one or more locators 230, an internal measurement unit (IMU) 226 (described above with reference to FIG. 2A), a vergence processing module 2030, head tracking sensors 2035, and a scene rendering module 2040.

Eye-tracking system 236 may track eye position and eye movement of a user of HMD 2005. A camera or other optical sensor, which may be part of eye-tracking system 236 inside HMD 2005, may capture image information of a user's eye(s), and eye-tracking system 236 may use the captured information to determine interpupillary distance, interocular distance, a three dimensional (3D) position of each eye relative to HMD 2005 (e.g., for distortion adjustment purposes), including a magnitude of torsion and rotation (i.e., roll, pitch, and yaw), and gaze directions for each eye.

In some examples, infrared light may be emitted within HMD 2005 and reflected from each eye. The reflected light may be received or detected by the camera and analyzed to extract eye rotation from changes in the infrared light reflected by each eye. Many methods for tracking the eyes of a user may be used by eye-tracking system 236. Accordingly, eye-tracking system 236 may track up to six degrees of freedom of each eye (i.e., 3D position, roll, pitch, and yaw), and at least a subset of the tracked quantities may be combined from two eyes of a user to estimate a gaze point (i.e., a 3D location or position in the virtual scene where the user is looking). For example, eye-tracking system 236 may integrate information from past measurements, measurements identifying a position of a user's head, and 3D information describing a scene presented by electronic display 208. Thus, information for the position and orientation of the user's eyes may be used to determine the gaze point in a virtual scene presented by HMD 2005 where the user is currently looking.

Varifocal block 232 may adjust its focal length (i.e., optical power) by adjusting a focal length of one or more varifocal structures. As noted above with reference to FIGS. 6A-6C, based on the eye-tracking information, varifocal block 232 may activate one or more LC lenses corresponding to the eye position for each eye of the user, and adjust its focal length by adjusting the voltages applied to the electrodes of the one or more activated LC lenses. Varifocal block 232 may adjust its focal length responsive to instructions from console 2020. Note that a varifocal tuning speed of a varifocal structure is limited by a tuning speed of the LC lenses. Varifocal block 232 may deactivate other LC lenses which are not corresponding to the eye position for each eye of the user, thereby reducing the power consumption of varifocal block 232. In addition, varifocal block 232 may determine a shift between the center of the activated LC lens(es) and the center of the adaptive lens assembly (i.e., a lens center shift).

Vergence processing module 2030 may determine a vergence distance of a user's gaze based on the gaze point or an estimated intersection of the gaze lines determined by eye-tracking system 236. Vergence is the simultaneous movement or rotation of both eyes in opposite directions to maintain single binocular vision, which is naturally and automatically performed by the human eye. Thus, a location where a user's eyes are verged is where the user is currently looking and is also typically the location where the user's eyes are currently focused. For example, vergence processing module 2030 may triangulate the gaze lines to estimate a distance or depth from the user associated with intersection of the gaze lines. Then the depth associated with intersection of the gaze lines may be used as an approximation for the accommodation distance, which identifies a distance from the user where the user's eyes are directed. Thus, the vergence distance may allow determination of a location where the user's eyes should be focused.

Locators 230 may be objects located in specific positions on HMD 2005 relative to one another and relative to a specific reference point on HMD 2005. A locator 230 may be a light emitting diode (LED), a corner cube reflector, a reflective marker, a type of light source that contrasts with an environment in which HMD 2005 operates, or some combination thereof.

IMU 226 may be an electronic device that generates fast calibration data based on measurement signals received from one or more of head tracking sensors 2035, which generate one or more measurement signals in response to motion of HMD 2005. Examples of head tracking sensors 2035 include accelerometers, gyroscopes, magnetometers, other sensors suitable for detecting motion, correcting error associated with IMU 226, or some combination thereof.

Based on the measurement signals from head tracking sensors 2035, IMU 226 may generate fast calibration data indicating an estimated position of HMD 2005 relative to an initial position of HMD 2005. For example, head tracking sensors 2035 may include multiple accelerometers to measure translational motion (forward/back, up/down, left/right) and multiple gyroscopes to measure rotational motion (e.g., pitch, yaw, and roll). IMU 226 may, for example, rapidly sample the measurement signals and calculate the estimated position of HMD 2005 from the sampled data. Alternatively, IMU 226 may provide the sampled measurement signals to console 2020, which determines the fast calibration data.

IMU 226 may additionally receive one or more calibration parameters from console 2020. As further discussed below, the one or more calibration parameters may be used to maintain tracking of HMD 2005. Based on a received calibration parameter, IMU 226 may adjust one or more of the IMU parameters (e.g., sample rate). In some examples, certain calibration parameters may cause IMU 226 to update an initial position of the reference point to correspond to a next calibrated position of the reference point. Updating the initial position of the reference point as the next calibrated position of the reference point may help to reduce accumulated error associated with determining the estimated position. The accumulated error, also referred to as drift error, may cause the estimated position of the reference point to "drift" away from the actual position of the reference point over time.

Scene rendering module 2040 may receive contents for the virtual scene from a virtual reality engine 2045 and provide display content for display on electronic display 208. Scene rendering module 2040 may include a hardware central processing unit (CPU), graphics processing unit (GPU), and/or a controller/microcontroller. Additionally, scene rendering module 2040 may adjust the content based on information from eye-tracking system 236, vergence processing module 2030, IMU 226, and head tracking sensors 2035. Scene rendering module 2040 may determine a portion of the content to be displayed on electronic display 208, based on one or more of eye-tracking system 236, tracking module 2055, head tracking sensors 2035, or IMU 226. For example, scene rendering module 2040 may determine a virtual scene, or any part of the virtual scene, to be displayed to the viewer's eyes. Scene rendering module 2040 may also dynamically adjust the displayed content based on the real-time configuration of varifocal block 232. In addition, based on the information of the determined lens center shift provided by varifocal block 232, scene rendering module 2040 may determine a shift of the virtual scene to be displayed on electronic display 208.

Imaging device 2010 may provide a monitoring function for HMD 2005 and may generate slow calibration data in accordance with calibration parameters received from console 2020. Slow calibration data may include one or more images showing observed positions of locators 230 that are detectable by imaging device 2010. Imaging device 2010 may include one or more cameras, one or more video cameras, other devices capable of capturing images including one or more locators 230, or some combination thereof. Slow calibration data may be communicated from imaging device 2010 to console 2020, and imaging device 2010 may receive one or more calibration parameters from console 2020 to adjust one or more imaging parameters (e.g., focal length, focus, frame rate, ISO, sensor temperature, shutter speed, aperture, etc.).

Input/output interface 2015 may be a device that allows a user to send action requests to console 2020. An action request may be a request to perform a particular action. For example, an action request may be used to start or end an application or to perform a particular action within the application. Input/output interface 2015 may include one or more input devices such as a keyboard, a mouse, a game controller, or any other suitable device. An action request received by input/output interface 2015 may be communicated to console 2020, which performs an action corresponding to the action request. In some examples, input/output interface 2015 may provide haptic feedback to the user in accordance with instructions received from console 2020. For example, haptic feedback may be provided by input/output interface 2015 when an action request is received, or console 2020 may communicate instructions to input/output interface 2015 causing input/output interface 2015 to generate haptic feedback when console 2020 performs an action.

Console 2020 may provide content to HMD 2005 for presentation to the user in accordance with information received from imaging device 2010, HMD 2005, or input/output interface 2015. In one example, as shown in FIG. 20, console 2020 may include an application store 2050, a tracking module 2055, and a virtual reality engine 2045, etc.

Application store 2050 may store one or more applications for execution by console 2020. An application may be a group of instructions that, when executed by a processor, generate content for presentation to the user. Content generated by an application may be in response to inputs received from the user via movement of HMD 2005 and/or input/output interface 2015. Examples of applications include gaming applications, conferencing applications, video playback applications, and/or other suitable applications.

Tracking module 2055 may calibrate varifocal system 2000 using one or more calibration parameters and may adjust one or more calibration parameters to reduce error in determining position of HMD 2005. For example, tracking module 2055 may adjust the focus of imaging device 2010 to obtain a more accurate position for observed locators 230 on HMD 2005. Moreover, calibration performed by tracking module 2055 may also account for information received from IMU 226. Additionally, when tracking of HMD 2005 is lost (e.g., imaging device 2010 loses line of sight of at least a threshold number of locators 230), tracking module 2055 may re-calibrate some or all of varifocal system 2000 components.

Additionally, tracking module 2055 may track the movement of HMD 2005 using slow calibration information from imaging device 2010, and determine positions of a reference point on HMD 2005 using observed locators from the slow calibration information and a model of HMD 2005. Tracking module 2055 may also determine positions of the reference point on HMD 2005 using position information from the fast calibration information from IMU 226 on HMD 2005. Additionally, tracking module 2055 may use portions of the fast calibration information, the slow calibration information, or some combination thereof, to predict a future location of HMD 2005, which is provided to virtual reality engine 2045.

Virtual reality engine 2045 may function as a controller to execute applications within varifocal system 2000 and may receive position information, acceleration information, velocity information, predicted future positions, or some combination thereof for HMD 2005 from tracking module 2055. Based on the received information, virtual reality engine 2045 may determine content to provide to HMD 2005 for presentation to the user, such as a virtual scene, one or more virtual objects to overlay onto a real-world scene, etc. In some examples, virtual reality engine 2045 may maintain focal capability information of varifocal block 232. Focal capability information is information that describes what focal distances are available to varifocal block 232. Focal capability information may include, e.g., a range of focus that varifocal block 232 is able to accommodate (e.g., 0 to 4 diopters) and/or combinations of settings for each activated LC lens that map to particular focal planes. In some examples, virtual reality engine 2045 may operate a GRIN LC lens(es) of varifocal block 232 by controlling voltages applied to driving electrodes and/or common electrodes of the GRIN LC lens(es).

Virtual reality engine 2045 may provide information to varifocal block 232, such as the accommodation and/or convergence parameters including what focal distances are available to varifocal block 232. Virtual reality engine 2045 may generate instructions for varifocal block 232 that cause varifocal block 232 to adjust its focal distance to a particular location. Virtual reality engine 2045 may generate the instructions based on focal capability information and, e.g., information from vergence processing module 2030, IMU 226, and head tracking sensors 2035, and provide the instructions to varifocal block 232 to configure and/or adjust the adaptive lens assembly. Virtual reality engine 2045 may use the information from vergence processing module 2030, IMU 226, and/or head tracking sensors 2035 to select a focal plane to present content to the user. Additionally, virtual reality engine 2045 may perform an action within an application executing on console 2020 in response to an action request received from input/output interface 2015 and may provide feedback to the user that the action was performed. The provided feedback may, for example, include visual and/or audible feedback via HMD 2005 and/or haptic feedback via input/output interface 2015.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 2100 in FIG. 21) or that visually immerses a user in an artificial reality (such as, e.g., virtual-reality system 2200 in FIG. 22). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 21, augmented-reality system 2100 may include an eyewear device 2102 with a frame 2110 configured to hold a left display device 2115(A) and a right display device 2115(B) in front of a user's eyes. Display devices 2115(A) and 2115(B) may act together or independently to present an image or series of images to a user. While augmented-reality system 2100 includes two displays, examples of this disclosure may be implemented in augmented-reality systems with a single NED or more than two NEDs.

In some examples, augmented-reality system 2100 may include one or more sensors, such as sensor 2140. Sensor 2140 may generate measurement signals in response to motion of augmented-reality system 2100 and may be located on substantially any portion of frame 2110. Sensor 2140 may represent one or more of a variety of different sensing mechanisms, such as a position sensor, an inertial measurement unit (IMU), a depth camera assembly, a structured light emitter and/or detector, or any combination thereof. In some examples, augmented-reality system 2100 may or may not include sensor 2140 or may include more than one sensor. In examples in which sensor 2140 includes an IMU, the IMU may generate calibration data based on measurement signals from sensor 2140. Examples of sensor 2140 may include, without limitation, accelerometers, gyroscopes, magnetometers, other suitable types of sensors that detect motion, sensors used for error correction of the IMU, or some combination thereof.

In some examples, augmented-reality system 2100 may also include a microphone array with a plurality of acoustic transducers 2120(A)-2120(J), referred to collectively as acoustic transducers 2120. Acoustic transducers 2120 may represent transducers that detect air pressure variations induced by sound waves. Each acoustic transducer 2120 may be configured to detect sound and convert the detected sound into an electronic format (e.g., an analog or digital format). The microphone array in FIG. 21 may include, for example, ten acoustic transducers: 2120(A) and 2120(B), which may be designed to be placed inside a corresponding ear of the user, acoustic transducers 2120(C), 2120(D), 2120(E), 2120(F), 2120(G), and 2120(H), which may be positioned at various locations on frame 2110, and/or acoustic transducers 2120(I) and 2120(J), which may be positioned on a corresponding neckband 2105.

In some examples, one or more of acoustic transducers 2120(A)-(J) may be used as output transducers (e.g., speakers). For example, acoustic transducers 2120(A) and/or 2120(B) may be earbuds or any other suitable type of headphone or speaker.

The configuration of acoustic transducers 2120 of the microphone array may vary. While augmented-reality system 2100 is shown in FIG. 21 as having ten acoustic transducers 2120, the number of acoustic transducers 2120 may be greater or less than ten. In some examples, using higher numbers of acoustic transducers 2120 may increase the amount of audio information collected and/or the sensitivity and accuracy of the audio information. In contrast, using a lower number of acoustic transducers 2120 may decrease the computing power required by an associated controller 2150 to process the collected audio information. In addition, the position of each acoustic transducer 2120 of the microphone array may vary. For example, the position of an acoustic transducer 2120 may include a defined position on the user, a defined coordinate on frame 2110, an orientation associated with each acoustic transducer 2120, or some combination thereof.

Acoustic transducers 2120(A) and 2120(B) may be positioned on different parts of the user's ear, such as behind the pinna, behind the tragus, and/or within the auricle or fossa. Or, there may be additional acoustic transducers 2120 on or surrounding the ear in addition to acoustic transducers 2120 inside the ear canal. Having an acoustic transducer 2120 positioned next to an ear canal of a user may enable the microphone array to collect information on how sounds arrive at the ear canal. By positioning at least two of acoustic transducers 2120 on either side of a user's head (e.g., as binaural microphones), augmented-reality system 2100 may simulate binaural hearing and capture a 3D stereo sound field around about a user's head. In some examples, acoustic transducers 2120(A) and 2120(B) may be connected to augmented-reality system 2100 via a wired connection 2130, and in other examples acoustic transducers 2120(A) and 2120(B) may be connected to augmented-reality system 2100 via a wireless connection (e.g., a BLUETOOTH connection). In still other examples, acoustic transducers 2120(A) and 2120(B) may not be used at all in conjunction with augmented-reality system 2100.

Acoustic transducers 2120 on frame 2110 may be positioned in a variety of different ways, including along the length of the temples, across the bridge, above or below display devices 2115(A) and 2115(B), or some combination thereof. Acoustic transducers 2120 may also be oriented such that the microphone array is able to detect sounds in a wide range of directions surrounding the user wearing the augmented-reality system 2100. In some examples, an optimization process may be performed during manufacturing of augmented-reality system 2100 to determine relative positioning of each acoustic transducer 2120 in the microphone array.

In some examples, augmented-reality system 2100 may include or be connected to an external device (e.g., a paired device), such as neckband 2105. Neckband 2105 generally represents any type or form of paired device. Thus, the following discussion of neckband 2105 may also apply to various other paired devices, such as charging cases, smart watches, smart phones, wrist bands, other wearable devices, hand-held controllers, tablet computers, laptop computers, other external compute devices, etc.

As shown, neckband 2105 may be coupled to eyewear device 2102 via one or more connectors. The connectors may be wired or wireless and may include electrical and/or non-electrical (e.g., structural) components. In some cases, eyewear device 2102 and neckband 2105 may operate independently without any wired or wireless connection between them. While FIG. 21 illustrates the components of eyewear device 2102 and neckband 2105 in example locations on eyewear device 2102 and neckband 2105, the components may be located elsewhere and/or distributed differently on eyewear device 2102 and/or neckband 2105. In some examples, the components of eyewear device 2102 and neckband 2105 may be located on one or more additional peripheral devices paired with eyewear device 2102, neckband 2105, or some combination thereof.

Pairing external devices, such as neckband 2105, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 2100 may be provided by a paired device or shared between a paired device and an eyewear device, thus reducing the weight, heat profile, and form factor of the eyewear device overall while still retaining desired functionality. For example, neckband 2105 may allow components that would otherwise be included on an eyewear device to be included in neckband 2105 since users may tolerate a heavier weight load on their shoulders than they would tolerate on their heads. Neckband 2105 may also have a larger surface area over which to diffuse and disperse heat to the ambient environment. Thus, neckband 2105 may allow for greater battery and computation capacity than might otherwise have been possible on a stand-alone eyewear device. Since weight carried in neckband 2105 may be less invasive to a user than weight carried in eyewear device 2102, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 2105 may be communicatively coupled with eyewear device 2102 and/or to other devices. These other devices may provide certain functions (e.g., tracking, localizing, depth mapping, processing, storage, etc.) to augmented-reality system 2100. In the example of FIG. 21, neckband 2105 may include two acoustic transducers (e.g., 2120(I) and 2120(J)) that are part of the microphone array (or potentially form their own microphone subarray). Neckband 2105 may also include a controller 2125 and a power source 2135.

Acoustic transducers 2120(I) and 2120(J) of neckband 2105 may be configured to detect sound and convert the detected sound into an electronic format (analog or digital). In the example of FIG. 21, acoustic transducers 2120(I) and 2120(J) may be positioned on neckband 2105, thereby increasing the distance between the neckband acoustic transducers 2120(I) and 2120(J) and other acoustic transducers 2120 positioned on eyewear device 2102. In some cases, increasing the distance between acoustic transducers 2120 of the microphone array may improve the accuracy of beamforming performed via the microphone array. For example, if a sound is detected by acoustic transducers 2120(C) and 2120(D) and the distance between acoustic transducers 2120(C) and 2120(D) is greater than, e.g., the distance between acoustic transducers 2120(D) and 2120(E), the determined source location of the detected sound may be more accurate than if the sound had been detected by acoustic transducers 2120(D) and 2120(E).

Controller 2125 of neckband 2105 may process information generated by the sensors on neckband 2105 and/or augmented-reality system 2100. For example, controller 2125 may process information from the microphone array that describes sounds detected by the microphone array. For each detected sound, controller 2125 may perform a direction-of-arrival (DOA) estimation to estimate a direction from which the detected sound arrived at the microphone array. As the microphone array detects sounds, controller 2125 may populate an audio data set with the information. In examples in which augmented-reality system 2100 includes an inertial measurement unit, controller 2125 may compute all inertial and spatial calculations from the IMU located on eyewear device 2102. A connector may convey information between augmented-reality system 2100 and neckband 2105 and between augmented-reality system 2100 and controller 2125. The information may be in the form of optical data, electrical data, wireless data, or any other transmittable data form. Moving the processing of information generated by augmented-reality system 2100 to neckband 2105 may reduce weight and heat in eyewear device 2102, making it more comfortable to the user.

Power source 2135 in neckband 2105 may provide power to eyewear device 2102 and/or to neckband 2105. Power source 2135 may include, without limitation, lithium ion batteries, lithium-polymer batteries, primary lithium batteries, alkaline batteries, or any other form of power storage. In some cases, power source 2135 may be a wired power source. Including power source 2135 on neckband 2105 instead of on eyewear device 2102 may help better distribute the weight and heat generated by power source 2135.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 2200 in FIG. 22, that mostly or completely covers a user's field of view. Virtual-reality system 2200 may include a front rigid body 2202 and a band 2204 shaped to fit around a user's head. Virtual-reality system 2200 may also include output audio transducers 2206(A) and 2206(B). Furthermore, while not shown in FIG. 22, front rigid body 2202 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 2100 and/or virtual-reality system 2200 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 2100 and/or virtual-reality system 2200 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 2100 and/or virtual-reality system 2200 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some examples, a single transducer may be used for both audio input and audio output.

In some examples, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The examples disclosed herein may enable or enhance a user's artificial-reality experience in one or more of these contexts and environments and/or in other contexts and environments.

In some examples, the systems described herein may also include an eye-tracking subsystem designed to identify and track various characteristics of a user's eye(s), such as the user's gaze direction. The phrase "eye tracking" may, in some examples, refer to a process by which the position, orientation, and/or motion of an eye is measured, detected, sensed, determined, and/or monitored. The disclosed systems may measure the position, orientation, and/or motion of an eye in a variety of different ways, including through the use of various optical-based eye-tracking techniques, ultrasound-based eye-tracking techniques, etc. An eye-tracking subsystem may be configured in a number of different ways and may include a variety of different eye-tracking hardware components or other computer-vision components. For example, an eye-tracking subsystem may include a variety of different optical sensors, such as two-dimensional (2D) or 3D cameras, time-of-flight depth sensors, single-beam or sweeping laser rangefinders, 3D LiDAR sensors, and/or any other suitable type or form of optical sensor. In this example, a processing subsystem may process data from one or more of these sensors to measure, detect, determine, and/or otherwise monitor the position, orientation, and/or motion of the user's eye(s).

As noted, the eye-tracking systems or subsystems disclosed herein may track a user's eye position and/or eye movement in a variety of ways. In one example, one or more light sources and/or optical sensors may capture an image of the user's eyes. The eye-tracking subsystem may then use the captured information to determine the user's inter-pupillary distance, interocular distance, and/or a 3D position of each eye (e.g., for distortion adjustment purposes), including a magnitude of torsion and rotation (i.e., roll, pitch, and yaw) and/or gaze directions for each eye. In one example, infrared light may be emitted by the eye-tracking subsystem and reflected from each eye. The reflected light may be received or detected by an optical sensor and analyzed to extract eye rotation data from changes in the infrared light reflected by each eye.

The eye-tracking subsystem may use any of a variety of different methods to track the eyes of a user. For example, a light source (e.g., infrared light-emitting diodes) may emit a dot pattern onto each eye of the user. The eye-tracking subsystem may then detect (e.g., via an optical sensor coupled to the artificial reality system) and analyze a reflection of the dot pattern from each eye of the user to identify a location of each pupil of the user. Accordingly, the eye-tracking subsystem may track up to six degrees of freedom of each eye (i.e., 3D position, roll, pitch, and yaw) and at least a subset of the tracked quantities may be combined from two eyes of a user to estimate a gaze point (i.e., a 3D location or position in a virtual scene where the user is looking) and/or an IPD.

In some cases, the distance between a user's pupil and a display may change as the user's eye moves to look in different directions. The varying distance between a pupil and a display as viewing direction changes may be referred to as "pupil swim" and may contribute to distortion perceived by the user as a result of light focusing in different locations as the distance between the pupil and the display changes. Accordingly, measuring distortion at different eye positions and pupil distances relative to displays and generating distortion corrections for different positions and distances may allow mitigation of distortion caused by pupil swim by tracking the 3D position of a user's eyes and applying a distortion correction corresponding to the 3D position of each of the user's eyes at a given point in time. Thus, knowing the 3D position of each of a user's eyes may allow for the mitigation of distortion caused by changes in the distance between the pupil of the eye and the display by applying a distortion correction for each 3D eye position. Furthermore, as noted above, knowing the position of each of the user's eyes may also enable the eye-tracking subsystem to make automated adjustments for a user's IPD.

In some examples, a display subsystem may include a variety of additional subsystems that may work in conjunction with the eye-tracking subsystems described herein. For example, a display subsystem may include a varifocal subsystem, a scene-rendering module, and/or a vergence-processing module. The varifocal subsystem may cause left and right display elements to vary the focal distance of the display device. In one example, the varifocal subsystem may physically change the distance between a display and the optics through which it is viewed by moving the display, the optics, or both. Additionally, moving or translating two lenses relative to each other may also be used to change the focal distance of the display. Thus, the varifocal subsystem may include actuators or motors that move displays and/or optics to change the distance between them. This varifocal subsystem may be separate from or integrated into the display subsystem. The varifocal subsystem may also be integrated into or separate from its actuation subsystem and/or the eye-tracking subsystems described herein.

In one example, the display subsystem may include a vergence-processing module configured to determine a vergence depth of a user's gaze based on a gaze point and/or an estimated intersection of the gaze lines determined by the eye-tracking subsystem. Vergence may refer to the simultaneous movement or rotation of both eyes in opposite directions to maintain single binocular vision, which may be naturally and automatically performed by the human eye. Thus, a location where a user's eyes are verged is where the user is looking and is also typically the location where the user's eyes are focused. For example, the vergence-processing module may triangulate gaze lines to estimate a distance or depth from the user associated with intersection of the gaze lines. The depth associated with intersection of the gaze lines may then be used as an approximation for the accommodation distance, which may identify a distance from the user where the user's eyes are directed. Thus, the vergence distance may allow for the determination of a location where the user's eyes should be focused and a depth from the user's eyes at which the eyes are focused, thereby providing information (such as an object or plane of focus) for rendering adjustments to the virtual scene.

The vergence-processing module may coordinate with the eye-tracking subsystems described herein to make adjustments to the display subsystem to account for a user's vergence depth. When the user is focused on something at a distance, the user's pupils may be slightly farther apart than when the user is focused on something close. The eye-tracking subsystem may obtain information about the user's vergence or focus depth and may adjust the display subsystem to be closer together when the user's eyes focus or verge on something close and to be farther apart when the user's eyes focus or verge on something at a distance.

The eye-tracking information generated by the above-described eye-tracking subsystems may also be used, for example, to modify various aspect of how different computer-generated images are presented. For example, a display subsystem may be configured to modify, based on information generated by an eye-tracking subsystem, at least one aspect of how the computer-generated images are presented. For instance, the computer-generated images may be modified based on the user's eye movement, such that if a user is looking up, the computer-generated images may be moved upward on the screen. Similarly, if the user is looking to the side or down, the computer-generated images may be moved to the side or downward on the screen. If the user's eyes are closed, the computer-generated images may be paused or removed from the display and resumed once the user's eyes are back open.

The above-described eye-tracking subsystems can be incorporated into one or more of the various artificial reality systems described herein in a variety of ways. For example, one or more eye-tracking system components may be incorporated into augmented-reality system 2100 in FIG. 21 and/or virtual-reality system 2200 in FIG. 22 to enable these systems to perform various eye-tracking tasks (including one or more of the eye-tracking operations described herein).

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the examples disclosed herein. This exemplary description is not intended to be exhaustive or to be limited to any precise form disclosed. Many modifications and variations are possible without departing from the spirit and scope of the present disclosure. The examples disclosed herein should be considered in all respects illustrative and not restrictive. Reference should be made to any claims appended hereto and their equivalents in determining the scope of the present disclosure.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

## Claims

1. A lens system comprising:
a lens comprising:
a liquid crystal module;
an incident side surface on a first side of the liquid crystal module; and
an exit side surface on a second side of the liquid crystal module,
wherein at least one of the incident side surface and the exit side surface comprises a curved surface.

2. The lens system of claim 1, wherein both the incident side surface and the exit side surface comprise a curved surface;
preferably wherein a radius of curvature of the incident side surface is approximately the same as a radius of curvature of the exit side surface.

3. The lens system of claim 1 or 2, wherein the liquid crystal module comprises:
a driving electrode array;
a common electrode; and
a lens liquid crystal layer disposed between the driving electrode array and the common electrode.

4. The lens system of any preceding claim, wherein the liquid crystal module extends along a curved path.

5. The lens system of any preceding claim, wherein:
the lens is a first lens; and
the lens system further comprises a second lens overlapping the first lens.

6. The lens system of claim 5, wherein the second lens comprises a curved surface facing the incident side surface or exit side surface of the first lens;
preferably wherein the curved surface of the second lens has a radius of curvature that is approximately the same as a radius of curvature of the facing incident side surface or exit side surface of the first lens.

7. The lens system of claim 5 or 6, wherein the second lens comprises a pancake lens.

8. The lens system of any of claims 5 to 7, further comprising a reflective polarizer positioned between the second lens and the first lens.

9. The lens system of any preceding claim, wherein the lens comprises a plurality of Fresnel reset sections concentrically arranged between a center and an outer periphery of the lens.

10. The lens system of and preceding claim, wherein the incident side surface comprises a convex surface and the exit side surface comprises a concave surface;
preferably wherein the concave exit side surface is laminated onto a convex surface of an abutting optical element.

11. A display device comprising:
a display screen having a plurality of light emitting elements; and
a lens system that receives light emitted from the display screen, the lens system comprising the lens system of any preceding claim.

12. The display device of claim 11, when dependent on claim 5, wherein the second lens is disposed between the display screen and the first lens.

13. The display device of claim 11 or 12, wherein the incident side surface comprises a convex surface facing the display screen.

14. A method comprising:
providing a lens comprising:
a liquid crystal module;
an incident side surface on a first side of the liquid crystal module; and
an exit side surface on a second side of the liquid crystal module, wherein at least one of the incident side surface and the exit side surface comprises a curved surface; and
positioning another curved surface of an optical element adjacent the at least one curved surface of the lens.

15. The method of claim 14, wherein the optical element comprises a second lens;
preferably further comprising positioning a display screen such that light emitted from the display screen passes through the optical element to the lens.
